(19) Europäisches Patentamt
European Patent Office
Office européen des brevets

(11) EP 4 209 553 A1

(12) EUROPEAN PATENT APPLICATION

(43) Date of publication:
**12.07.2023 Bulletin 2023/28**

(21) Application number: **22150716.3**

(22) Date of filing: **10.01.2022**

(51) International Patent Classification (IPC):
***C08L 69/00*** *(2006.01)* ***C23C 18/20*** *(2006.01)*

(52) Cooperative Patent Classification (CPC):
(C-Sets available)
**C08L 69/00; C08L 69/005; C23C 18/1608; C23C 18/1612; C23C 18/165; C23C 18/204; C23C 18/22; C23C 18/30;** C08L 2205/025; C08L 2205/035; C23C 18/32 (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SHPP Global Technologies B.V.**
**4612 PX Bergen op Zoom (NL)**

(72) Inventors:
- **YANG, Jianmin**
  **Shanghai (CN)**
- **HU, Dongli**
  **Shanghai (CN)**
- **FANG, Yapeng**
  **Shanghai (CN)**

(74) Representative: **Dehns**
**St. Bride's House**
**10 Salisbury Square**
**London EC4Y 8JD (GB)**

(54) **POLYCARBONATE COMPOSITIONS WITH FLAME RETARDANT PROPERTIES FOR LASER ACTIVATING PLATING PROCESSES**

(57) An article is formed according to a process including: (a) forming a substrate component including a thermoplastic composition; and (b) applying a laser activated plating (LAP) process to the substrate component to apply a metal film on the substrate component and form the article. The thermoplastic composition includes: (1) from about 10 wt% to about 80 wt% of a polycarbonate component; (2) from about 5 wt% to about 80 wt% of a siloxane component including a poly(carbonate-siloxane) copolymer or silicon oil, wherein the poly(carbonate-siloxane) copolymer, if present, is different from the polycarbonate component in element (1); (3) from about 10 wt% to about 60 wt% of a glass fiber component; and (4) from about 1 wt% to about 15 wt% of a flame retardant component including a phosphorous compound.

EP 4 209 553 A1

(52) Cooperative Patent Classification (CPC): (Cont.)

C-Sets
**C08L 69/00, C08K 5/5399, C08K 7/14,
C08L 27/18, C08L 69/00, C08L 83/04,
C08L 83/10;
C08L 69/005, C08K 5/5399, C08K 7/14,
C08L 27/18, C08L 69/00, C08L 69/005,
C08L 83/04, C08L 83/10**

## Description

### FIELD OF THE DISCLOSURE

The present disclosure relates to laser activated plating (LAP) articles, and in particular to LAP articles including a thermoplastic composition that provides the article with improved plating and mechanical properties.

### BACKGROUND OF THE DISCLOSURE

Laser direct structuring (LDS) is a conventional selective metallization process for thermoplastics. LDS technology was developed by LPKF in 1997 as a laser-based procedure for the production of molded interconnect devices (MID's); the process is known as the LPKF-LDS™ process. In an LDS process, a specially formulated thermoplastic composition is injection molded and its surface is activated by a laser. The activated surface is then cleaned, and an electroless copper plating layer is applied to the surface followed by an electroless nickel plating layer. Finally, a layer of gold is applied to the plated layer.

Polycarbonate-based (PC-based) thermoplastics have been developed by SABIC for use in LDS processes. These PC-based LDS materials have been widely used for use in antenna articles on laptop, tablet, mobile phone and other smart devices applications. However, the LDS selective metallization process requires specially formulated materials that require the addition of expensive laser sensitive additives. In addition, the laser equipment for use in LDS processes is proprietary and expensive.

A laser activated plating (LAP) process was developed in 2014 as an alternative to the LDS process. In an LAP process the laser activation parameters and subsequent selective metallization (chemical plating) processes are optimized. As a result, thermoplastic formulations for use in LAP processes do not require the use of special LDS additives. In some applications, however, the LAP process is not as effective as traditional LDS processes. Improved LAP formulations are thus desired.

These and other shortcomings are addressed by aspects of the present disclosure.

### SUMMARY

Aspects of the disclosure relate to an article formed according to a process including: (a) forming a substrate component including a thermoplastic composition; and (b) applying a laser activated plating (LAP) process to the substrate component to apply a metal film on the substrate component and form the article. The thermoplastic composition includes: (1) from about 10 wt% to about 80 wt% of a polycarbonate component; (2) from about 5 wt% to about 80 wt% of a siloxane component including a poly(carbonate-siloxane) copolymer or silicon oil, wherein the poly(carbonate-siloxane) copolymer, if present, is different from the polycarbonate component in element (1); (3) from about 10 wt% to about 60 wt% of a glass fiber component; and (4) from about 1 wt% to about 15 wt% of a flame retardant component including a phosphorous compound.

Aspects of the disclosure further relate to methods for forming a laser activated plating (LAP) article, the method including: (a) forming a substrate component including a thermoplastic composition; (b) etching a surface of the substrate component with a laser to form an etched surface; (c) applying a colloidal metallic treatment to the etched surface to form a grafted metallic surface; and (d) applying a plurality of metal layers to the grafted metallic surface to form the LAP article. The thermoplastic composition includes: (1) from about 10 wt% to about 80 wt% of a polycarbonate component; (2) from about 5 wt% to about 80 wt% of a siloxane component including a poly(carbonate-siloxane) copolymer or silicon oil, wherein the poly(carbonate-siloxane) copolymer, if present, is different from the polycarbonate component in element (1); (3) from about 10 wt% to about 60 wt% of a glass fiber component; and (4) from about 1 wt% to about 15 wt% of a flame retardant component including a phosphorous compound.

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various aspects discussed in the present document.

FIGS. 1A and 1B are photographs of plated samples of comparative and example compositions formed according to aspects of the disclosure.

FIGS. 2A-2D are optical microscope (OM) images of LAP plated samples of comparative and example compositions formed according to aspects of the disclosure.

FIGS. 3A-3D are scanning electron microscopy (SEM) images of LAP plated samples of comparative and example compositions formed according to aspects of the disclosure.

FIGS. 4A-4D are SEM images of a laser etched surface of samples of comparative and example compositions formed according to aspects of the disclosure.

## DETAILED DESCRIPTION

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polycarbonate component" includes mixtures of two or more polycarbonate polymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated $\pm$10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot

be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, the terms "number average molecular weight" or "$M_n$" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, e.g., polycarbonate polymers, by methods well known to a person having ordinary skill in the art using molecular weight standards, e.g. polycarbonate standards or polystyrene standards, preferably certified or traceable molecular weight standards.

As used herein, the terms "weight average molecular weight" or "$M_w$" can be used interchangeably, and are defined by the formula:

$$M_w = \frac{\sum N_i M_i^{\,2}}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "polydispersity index" or "PDI" can be used interchangeably, and are defined by the formula:

$$PDI = \frac{M_w}{M_n}.$$

The PDI has a value equal to or greater than 1, but as the polymer chains approach uniform chain length, the PDI approaches unity.

The terms "BisA," "BPA," or "bisphenol A," which can be used interchangeably, as used herein refers to a compound having a structure represented by the formula:

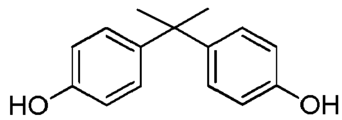

BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

**Articles formed from LAP Process**

Aspects of the disclosure related to an article formed according to a process including: (a) forming a substrate component including a thermoplastic composition; and (b) applying a laser activated plating (LAP) process to the substrate component to apply a metal film on the substrate component and form the article. The thermoplastic composition includes: (1) from about 10 wt% to about 80 wt% of a polycarbonate component; (2) from about 5 wt% to about 80 wt% of a siloxane component including a poly(carbonate-siloxane) copolymer or silicon oil, wherein the poly(carbonate-siloxane) copolymer, if present, is different from the polycarbonate component in element (1); (3) from about 10 wt% to about 60 wt% of a glass fiber component; and (4) from about 1 wt% to about 15 wt% of a flame retardant component including a phosphorous compound. The combined weight percent value of all components does not exceed 100 wt%, and all weight percent values are based on the total weight of the composition.

In some aspects the thermoplastic composition includes: (1) from about 20 wt% to about 40 wt% of the polycarbonate component; (2) from about 5 wt% to about 10 wt% of the siloxane component; (3) from about 40 wt% to about 60 wt% of the glass fiber component; and (4) from about 5 wt% to about 10 wt% of the flame retardant component.

In certain aspects the thermoplastic composition does not include a laser direct structuring additive. In specific aspects the composition does not include copper or tin.

The polycarbonate component includes in some aspects a polycarbonate homopolymer, a polycarbonate copolymer, or a combination thereof. An exemplary polycarbonate homopolymer is bisphenol-A (BPA) polycarbonate. In further aspects the polycarbonate component includes a polycarbonate copolymer including sebacic acid monomer units and bisphenol-A monomer units. Sebacic acid has the following structure:

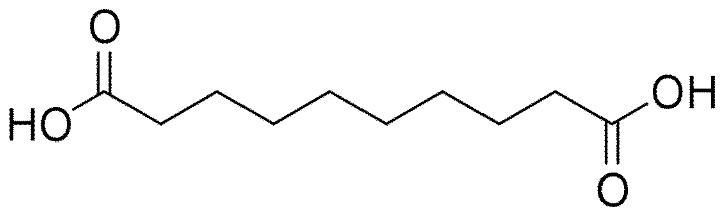

Bisphenol-A has the structure:

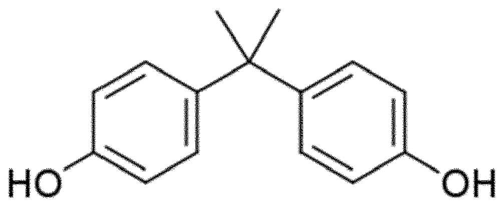

As a copolymer, the sebacic acid monomer provides the copolymer with good flow and ductility properties at a lower processing temperature, while the BPA monomer provides improved heat and modulus properties. Exemplary sebacic acid/BPA copolymers include a high molecular weight (Mw) high flow/ductile (HFD) polycarbonate, a low Mw HFD polycarbonate, or a combination thereof. Suitable polycarbonate homopolymers and copolymers are available from SABIC.

In some aspects the siloxane component includes a poly(carbonate-siloxane) copolymer, wherein the poly(carbonate-siloxane) copolymer has a siloxane content of from about 5 wt% to about 45 wt%.

The poly(carbonate-siloxane) (PC-Si) copolymers include carbonate units and siloxane units. Suitable carbonate units are shown in formula (1)

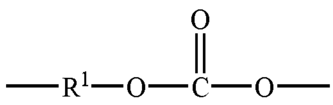 (1)

wherein at least 60 percent of the total number of $R^1$ groups is aromatic, or each $R^1$ contains at least one $C_{6-30}$ aromatic group. A combination of different $R^1$ groups can be present. The carbonate units can be derived from a dihydroxy compound such as an aromatic dihydroxy compound of formula (2) or a bisphenol of formula (3)

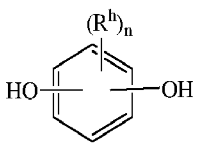 (2)

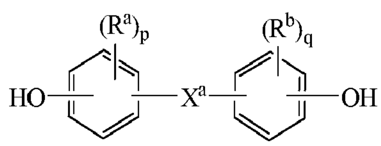 (3)

wherein in formula (2), each $R^h$ is independently a halogen atom, for example bromine, a $C_{1-10}$ hydrocarbyl group such as a $C_{1-10}$ alkyl, a halogen-substituted $C_{1-10}$ alkyl, a $C_{6-10}$ aryl, or a halogen-substituted $C_{6-10}$ aryl, and n is 0 to 4; and in formula (3), $R^a$ and $R^b$ are each independently a halogen, $C_{1-12}$ alkoxy, or $C_{1-12}$ alkyl, and p and q are each independently integers of 0 to 4, such that when p or q is less than 4, the valence of each carbon of the ring is filled by hydrogen.

In an aspect in formulas (2) and (3), $R^a$ and $R^b$ are each independently $C_{1-3}$ alkyl or $C_{1-3}$ alkoxy, p and q are each independently 0 to 1, and $X^a$ is a single bond, -O-, - S(O)-, -S(O)$_2$-, -C(O)-, a $C_{1-11}$ alkylidene of formula -C($R^c$)($R^d$) - wherein $R^c$ and $R^d$ are each independently hydrogen or $C_{1-10}$ alkyl, each $R^h$ is independently bromine, a $C_{1-3}$ alkyl, a halogen-substituted $C_{1-3}$ alkyl, and n is 0 to 1.

In still other aspects in formula (2), p and q is each 0, or p and q is each 1, and $R^a$ and $R^b$ are each a $C_{1-3}$ alkyl group, preferably methyl, disposed meta to the hydroxy group on each arylene group; $X^a$ is a bridging group connecting the two hydroxy-substituted aromatic groups, where the bridging group and the hydroxy substituent of each $C_6$ arylene group are disposed para to each other on the $C_6$ arylene group, and $X^a$ can be a substituted or unsubstituted $C_{3-18}$ cycloalkylidene; a $C_{1-25}$ alkylidene of the formula -C($R^c$)($R^d$) - wherein $R^c$ and $R^d$ are each independently hydrogen, $C_{1-12}$ alkyl, $C_{1-12}$ cycloalkyl, $C_{7-12}$ arylalkylene, $C_{1-12}$ heteroalkyl, or cyclic $C_{7-12}$ heteroarylalkylene; or a group of the formula -C(=$R^e$)-wherein $R^e$ is a divalent $C_{1-12}$ hydrocarbon group.

Examples of diphenols (2) included resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like. A combination including different diphenol compounds can be used.

Examples of bisphenols (3) include 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha,alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfoxide, bis(4-hydroxyphenyl)sulfone, 9,9-bis(4-hydroxyphenyl)fluorene, 2,7-dihydroxypyrene, 6,6'-dihydroxy-3,3,3',3'- tetramethylspiro(bis)indane ("spirobiindane bisphenol"), 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 2,7-dihydroxycarbazole, or the like. A combination including different bisphenol compounds can be used.

Specific dihydroxy compounds include resorcinol, 2,2-bis(4-hydroxyphenyl) propane (bisphenol A or BPA), 3,3-bis(4-hydroxyphenyl) phthalimidine, 2-phenyl-3,3'-bis(4-hydroxyphenyl) phthalimidine (also known as N-phenyl phenolphthalein bisphenol, "PPPBP", or 3,3-bis(4-hydroxyphenyl)-2-phenylisoindolin-1-one), 1,1-bis(4-hydroxy-3-methylphenyl) cyclohexane, and 1,1-bis(4-hydroxyphenyl)-3,3,5-trimethylcyclohexane (TMC bisphenol).

In an aspect of formula (2), $R^a$ and $R^b$ are each independently $C_{1-6}$ alkyl or $C_{1-3}$ alkoxy, p and q are each independently 0 to 1, and $X^a$ is a single bond, -O-, -S(O)-, $-S(O)_2-$, - C(O)-, a $C_{1-11}$ alkylidene of formula $-C(R^c)(R^d)$ - wherein $R^c$ and $R^d$ are each independently hydrogen or $C_{1-10}$ alkyl, each $R^h$ is independently bromine, a $C_{1-3}$ alkyl, a halogen-substituted $C_{1-3}$ alkyl, and n is 0 to 1.

In more preferred aspect, the bisphenol polycarbonate is a bisphenol A polycarbonate homopolymer, also referred to as bisphenol A homopolycarbonate, which has repeating structural carbonate units of formula (1a).

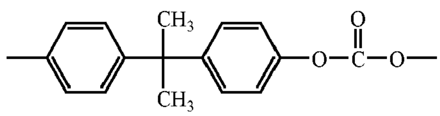

(1a)

Such linear homopolymers containing bisphenol A carbonate units (BPA-PC) include those commercially available under the trade name LEXAN from SABIC; or a branched, cyanophenol end-capped bisphenol A homopolycarbonate produced via interfacial polymerization, containing 3 mol% 1,1,1-tris(4-hydroxyphenyl)ethane (THPE) branching agent, commercially available under the trade name LEXAN CFR from SABIC.

The siloxane units (also referred to as polysiloxane blocks) are optionally of formula (4)

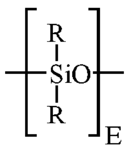

(4)

wherein each R is independently a $C_{1-13}$ monovalent organic group. For example, R can be a $C_{1-13}$ alkyl, C-$C_{13}$ alkoxy, $C_{2-13}$ alkenyl, $C_{2-13}$ alkenyloxy, $C_{3-6}$ cycloalkyl, $C_{3-6}$ cycloalkoxy, $C_{6-14}$ aryl, $C_{6-10}$ aryloxy, $C_{7-13}$ arylalkylene, $C_{7-13}$ arylalkylenoxy, $C_{7-13}$ alkylarylene, or $C_{7-13}$ alkylarylenoxy. The foregoing groups can be fully or partially halogenated with one or more of fluorine, chlorine, bromine, or iodine. In an aspect, where a transparent poly(carbonate-siloxane) is desired, R is unsubstituted by halogen. A combination of the foregoing R groups can be used in the same poly(carbonate-siloxane).

In an aspect, each R is independently a $C_{1-3}$ alkyl, $C_{1-3}$ alkoxy, $C_{3-6}$ cycloalkyl, $C_{3-6}$ cycloalkoxy, $C_{6-14}$ aryl, $C_{6-10}$ aryloxy, $C_7$ arylalkylene, $C_7$ arylalkylenoxy, $C_7$ alkylarylene, or $C_7$ alkylarylenoxy. In still another aspect, each R is independently methyl, trifluoromethyl, or phenyl.

The value of E in formula (4) can vary widely depending on the type and relative amount of each component in the thermoplastic composition, the desired properties of the composition, and like considerations. Generally, E has an average value of 2 to 1,000, or 2 to 500, 2 to 200, or 2 to 125, 5 to 80, or 10 to 70. In an aspect, E has an average value of 10 to 80 or 10 to 40, and in still another aspect, E has an average value of 40 to 80, or 40 to 70. Where E is of a lower value, e.g., less than 40, it can be desirable to use a relatively larger amount of the poly(carbonate-siloxane)

copolymer. Conversely, where E is of a higher value, e.g., greater than 40, a relatively lower amount of the poly(carbonate-siloxane) copolymer can be used. A combination of a first and a second (or more) poly(carbonate-siloxane)s can be used, wherein the average value of E of the first copolymer is less than the average value of E of the second copolymer.

Suitable siloxane units have been described, for example, in WO 2008/042500 A1, WO 2010/076680 A1, and WO 2016/174592 A1. In an aspect, the siloxane units are of formula (5)

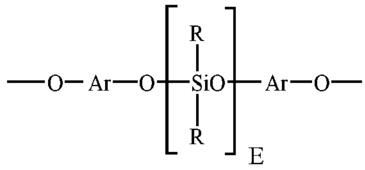

(5)

wherein E is as defined for formula (4); each R can be the same or different, and is as defined for formula (4); and Ar can be the same or different, and is a substituted or unsubstituted $C_6$-$C_{30}$ arylene, wherein the bonds are directly connected to an aromatic moiety. Ar groups in formula (5) can be derived from a $C_6$-$C_{30}$ dihydroxyarylene compound, for example a dihydroxy compound of formula (2) or formula (3). Exemplary dihydroxy compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane, or a combination thereof.

Specific examples of siloxane units of formula (5) include those of the formulas (6a) and (6b)

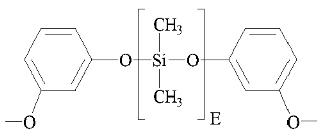

(6a)

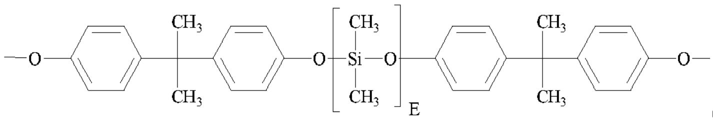

(6b)

wherein E is as described in Formula (4). In an aspect, E has an average value of 10 to 80 or 10 to 40, and in still another aspect, E has an average value of 40 to 80, or 40 to 70.

In another aspect, the siloxane units are of formula (7)

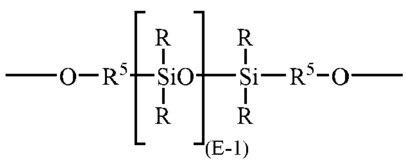

(7)

wherein R and E are as described for formula (4), and each $R^5$ is independently a divalent $C_{1-30}$ hydrocarbylene group, and wherein the polymerized polysiloxane unit is the reaction residue of its corresponding dihydroxy compound. In a specific aspect, the polydiorganosiloxane blocks are of formula (8):

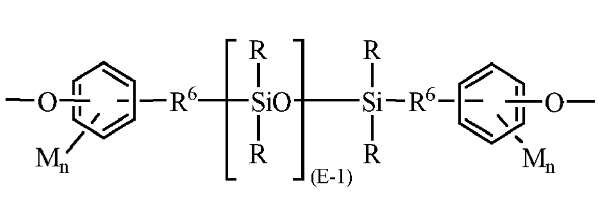

(8)

wherein R and E are as defined for formula (5). $R^6$ in formula (8) is a divalent $C_{2-8}$ aliphatic group. Each M in formula (8) can be the same or different, and can be a halogen, cyano, nitro, $C_{1-8}$ alkylthio, $C_{1-8}$ alkyl, $C_{1-8}$ alkoxy, $C_{2-8}$ alkenyl, $C_{2-8}$ alkenyloxy, $C_{3-8}$ cycloalkyl, $C_{3-8}$ cycloalkoxy, $C_{6-10}$ aryl, $C_{6-10}$ aryloxy, $C_{7-12}$ arylalkylene, $C_{7-12}$ arylalkylenoxy, $C_{7-12}$ alkylarylene, or $C_{7-12}$ alkylarylenoxy, wherein each n is independently 0, 1, 2, 3, or 4.

In an aspect in formula (8), M is bromo or chloro, an alkyl such as methyl, ethyl, or propyl, an alkoxy such as methoxy, ethoxy, or propoxy, or an aryl such as phenyl, chlorophenyl, or tolyl; $R^6$ is a dimethylene, trimethylene or tetramethylene; and R is a $C_{1-8}$ alkyl, haloalkyl such as trifluoropropyl, cyanoalkyl, or aryl such as phenyl, chlorophenyl

or tolyl.

In another aspect in formula (8), R is methyl, or a combination of methyl and trifluoropropyl, or a combination of methyl and phenyl. In still another aspect in formula (8), R is methyl, M is methoxy, n is one, and $R^6$ is a divalent $C_{1-3}$ aliphatic group. Preferred polydiorganosiloxane blocks are of the formulas

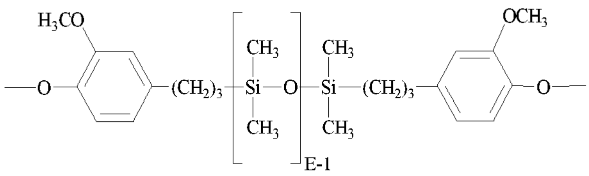
(8a),

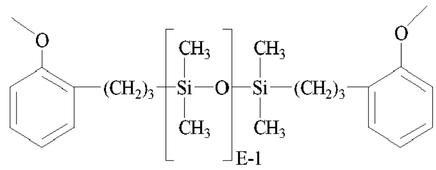
(8b),

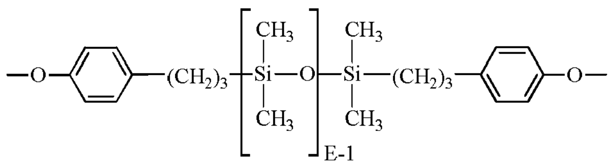
(8c),

or a combination thereof, wherein E has an average value of 10 to 100, preferably 20 to 60, more preferably 30 to 50, or 40 to 50.

In an aspect, the poly(carbonate-siloxane) includes carbonate units derived from bisphenol A, and repeating siloxane units (8a), (8b), (8c), or a combination thereof (preferably of formula 7a), wherein E has an average value of E has an average value of 10 to 100, or 20 to 60, or 30 to 60, or 40 to 60. In an aspect, the poly(carbonate-siloxane)s include carbonate units derived from bisphenol A and repeating siloxane units of formula (8a) (8b), or (8c), wherein E has an average value of 10 to 100, or 20 to 60, or 30 to 50, or 40 to 50.

The PC-Si copolymer can have a siloxane content of from about 5 to 45 wt% based on the total weight of the poly(carbonate-siloxane). In other aspects the PC-Si copolymer has a siloxane content of from about 5 wt% to about 25 wt%, from about 5 wt% to about 20 wt%, from about 5 wt% to about 10 wt%, or from about 15 wt% to about 25 wt%. The thermoplastic composition may have a plurality (e.g., 2 or more) PC-Si copolymers, each of the PC-Si copolymers having a siloxane content of from about 5 to 45 wt% based on the total weight of the poly(carbonate-siloxane). Each of the plurality of PC-Si copolymers may independently have a siloxane within one of the ranges set forth above, e.g., a first PC-Si copolymer having a siloxane content of from about 5 wt% to about 10 wt% and a second PC-Si copolymer having a siloxane content of from about 15 wt% to about 25 wt%. As used herein, "siloxane content" of the poly(carbonate-siloxane) means the content of siloxane units based on the total weight of the poly(carbonate-siloxane). Exemplary PC-Si copolymers include LEXAN™ EXL resins available from SABIC, including EXL resin having a siloxane content of 20 wt% (opaque EXL) and EXL resin having a siloxane content of 6 wt% (transparent EXL).

The poly(carbonate-siloxane) copolymer can be transparent or opaque and can be combined with various colorants including colored flakes and the like to give objects with fluorescent, phosphorescent, reflective, and sparkle appearance. Pigments and dyes that change color at different temperatures may also be used in combination with the copolymer.

The composition may further include in some aspects silicone oil. The silicone oil may be included in place of or in addition to the PC-Si copolymer described herein. A purely exemplary silicone oil includes from 60-90% dimethylpolysiloxane and from 30-60% MQ resin having the following chemical structure:

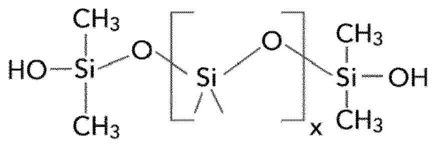

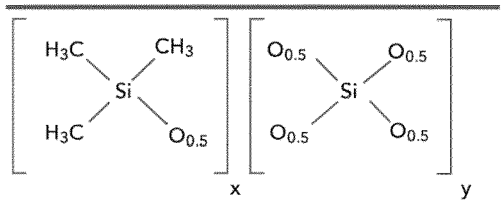

M Q

Silicone resins include branched, cage-like oligosiloxanes with the general formula of RnSiXmOy, where R is a non-reactive substituent such as methyl (Me) or phenyl (Ph) and X is a functional group such as hydrogen (H), hydroxyl (OH), chlorine (Cl) and alkoxy (OR). When R is a methyl group, there are several possible functional siloxane monomeric units, including $Me_3SiO$ ("M"), $Me_2SiO_2$ ("D"), $MeSiO_3$ ("T") and $SiO_4$ ("Q"). Thus the exemplary silicone oil described above including MQ resin includes $Me_3SiO$ and $SiO_4$. It will be appreciated, however, that other silicone oils may be used in compositions according to aspects of the disclosure.

The glass fiber component may include any suitable type of glass fiber. In some aspects the glass fiber component includes flat glass fibers.

The flame retardant compound including a phosphorous compound may include, but is not limited to, phenoxyphosphazene (PPZ), bisphenol-A diphenyl phosphate (BPADP), resorcinol diphosphate (RDP), phosphorous acid, borate acid, a phosphate ester, bisphenol-A bis(diphenyl phosphate) (BDP), or a combination thereof. An exemplary phosphate ester is Fyrolflex™ Sol-DP, available from ICL Industrial Products.

In certain aspects the thermoplastic composition further includes from greater than 0 wt% to about 15 wt% of an additional polycarbonate copolymer including 1,1,1-tris-(p-hydroxyphenyl)ethane (THPE) branched 4-hydroxybenzonitrile (HBN) endcapped polycarbonate, such as but not limited to CFR polycarbonate available from SABIC.

The thermoplastic composition may in some aspects include at least one additional additive. The at least one additional additive may include, but is not limited to, an acid scavenger, an anti-drip agent, an antioxidant, an antistatic agent, a chain extender, a colorant, a release agent, a flow promoter, a lubricant, a plasticizer, a quenching agent, a flame retardant, a UV reflecting additive, an impact modifier, a blowing agent, a reinforcing agent, or a combination thereof.

Articles formed according to the LAP process described herein with the thermoplastic compositions described herein have improved properties as compared to conventional LDS plated articles and/or LAP plated articles that include conventional thermoplastic compositions. In some aspects the article has improved plating performance as compared to a comparative LAP plated article including a thermoplastic composition that does not include the siloxane component. A "comparative LAP plated article" is an article that includes a thermoplastic composition that is identical to the thermoplastic composition described herein but that does not include the siloxane component; an equivalent amount of another polycarbonate component (e.g., polycarbonate homopolymer) replaces the siloxane component in the comparative article. "Improved plating performance" is evaluated by observing the article with the naked eye.

In certain aspects the article has improved notched Izod impact strength ("NII") at 23 °C as compared to a comparative LAP plated article including a thermoplastic composition that does not include the siloxane component, wherein NII is determined according to ASTM D256 using a 3.2 millimeter (mm) specimen bar. In further aspects the NII of the article is at least 5% improved, or at least 10% improved, or at least 15% improved, or at least 16% improved, or at least 17% improved, or at least 18% improved, or from 5-50% improved, or from 5-45% improved, or from 5-40% improved, or from 5-35% improved, or from 5-30% improved, or from 5-25% improved, from 10-50% improved, or from 10-45% improved, or from 10-40% improved, or from 10-35% improved, or from 10-30% improved, or from 10-25% improved, or from 15-50% improved, or from 15-45% improved, or from 15-40% improved, or from 15-35% improved, or from 15-30% improved, or from 15-25% improved, as compared to the comparative LAP plated article including a thermoplastic composition that does not include the siloxane component.

In other aspects the article has a notched Izod impact strength ("NII") at 23 °C of at least 150 Joules per meter (J/m), wherein NII is determined according to ASTM D256 using a 3.2 millimeter (mm) specimen bar. In some aspects the article has a NII at 23 °C of at least 155 J/m, or at least 160 J/m, or at least 165 J/m, or at least 170 J/m, or at least 175 J/m, or from 155-225 J/m, or from 155-200 J/m, or from 160-200 J/m, or from 165-200 J/m, or from 170-200 J/m, or from 175-200 J/m.

## Methods of Manufacture

Substrate components including the thermoplastic compositions according to aspects of the disclosure may be manufactured according to conventional methods. The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

Specific aspects of the disclosure relate to methods for forming a laser activated plating (LAP) article, the method including: (a) forming a substrate component including a thermoplastic composition; (b) etching a surface of the substrate component with a laser to form an etched surface; (c) applying a colloidal metallic treatment to the etched surface to form a grafted metallic surface; and (d) applying a plurality of metal layers to the grafted metallic surface to form the LAP article. The thermoplastic composition may include any of the components - and in the amounts - described herein. In certain aspects the thermoplastic composition does not include a laser direct structuring additive. In further aspects the composition does not comprise copper or tin.

The metal in the colloidal metallic treatment includes palladium in some aspects.

The metal applied to the etched surface in the plurality of metal layers in step (d) may include, but is not limited to, nickel (Ni).

## Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion molded. In a still further aspect, the article is injection molded. In specific aspects, the article is an antenna for a mobile device such as but not limited to a laptop, tablet, mobile phone or other smart device.

In further aspects article is an antenna for a mobile device. The mobile device may include, but is not limited to, a laptop, a tablet, a mobile phone, or a smart device.

Various combinations of elements of this disclosure are encompassed by this disclosure, e.g., combinations of elements from dependent claims that depend upon the same independent claim.

**Aspects of the Disclosure**

In various aspects, the present disclosure pertains to and includes at least the following aspects.

Aspect 1. An article formed according to a process comprising:

(a) forming a substrate component comprising a thermoplastic composition; and
(b) applying a laser activated plating (LAP) process to the substrate component to apply a metal film on the substrate component and form the article,

wherein the thermoplastic composition comprises:

(1) from about 10 wt% to about 80 wt% of a polycarbonate component;
(2) from about 5 wt% to about 80 wt% of a siloxane component comprising a poly(carbonate-siloxane) copolymer or silicon oil, wherein the poly(carbonate-siloxane) copolymer, if present, is different from the polycarbonate component in element (1);
(3) from about 10 wt% to about 60 wt% of a glass fiber component; and
(4) from about 1 wt% to about 15 wt% of a flame retardant component comprising a phosphorous compound, and

wherein the combined weight percent value of all components does not exceed 100 wt%, and all weight percent values are based on the total weight of the composition.

Aspect 2. The article according to Aspect 1, wherein the thermoplastic composition comprises:

(1) from about 20 wt% to about 40 wt% of the polycarbonate component;
(2) from about 5 wt% to about 10 wt% of the siloxane component;
(3) from about 40 wt% to about 60 wt% of the glass fiber component; and
(4) from about 5 wt% to about 10 wt% of the flame retardant component.

Aspect 3. The article according to Aspect 1 or 2, wherein the thermoplastic composition does not include a laser direct structuring additive.

Aspect 4. The article according to any of Aspects 1 to 3, wherein the composition does not comprise copper or tin.

Aspect 5. The article according to any of Aspects 1 to 4, wherein the polycarbonate component comprises a polycarbonate homopolymer, a polycarbonate copolymer, or a combination thereof.

Aspect 6. The article according to Aspect 5, wherein the polycarbonate component comprises a polycarbonate copolymer comprising sebacic acid monomer units and bisphenol-A monomer units.

Aspect 7. The article according to any of Aspects 1 to 6, wherein the siloxane component comprises a poly(carbonate-siloxane) copolymer, wherein the poly(carbonate-siloxane) copolymer has a siloxane content of from about 5 wt% to about 45 wt%.

Aspect 8. The article according to Aspect 7, wherein the thermoplastic composition comprises from about 5 wt% to about 20 wt% of a poly(carbonate-siloxane) copolymer having a siloxane content of from about 15 wt% to about 25 wt%.

Aspect 9. The article according to any of Aspects 1 to 8, wherein the glass fiber component comprises flat glass fibers.

Aspect 10. The article according to any of Aspects 1 to 9, wherein the flame retardant compound comprising a phosphorous compound comprises phenoxyphosphazene (PPZ), bisphenol-A diphenyl phosphate (BPADP), resorcinol diphosphate (RDP), phosphorous acid, borate acid, a phosphate ester, bisphenol-A bis(diphenyl phosphate) (BDP), or a combination thereof.

Aspect 11. The article according to any of Aspects 1 to 10, wherein the thermoplastic composition further comprises from greater than 0 wt% to about 15 wt% of an additional polycarbonate copolymer comprising 1,1,1-tris-(p-hydroxyphenyl)ethane (THPE) branched 4-hydroxybenzonitrile (HBN) endcapped polycarbonate.

Aspect 12. The article according to any of Aspects 1 to 11, wherein the thermoplastic composition comprises at least one additional additive.

Aspect 13. The article according to Aspect 12, wherein the at least one additional additive comprises an acid scavenger, an anti-drip agent, an antioxidant, an antistatic agent, a chain extender, a colorant, a release agent, a flow promoter, a lubricant, a plasticizer, a quenching agent, a flame retardant, a UV reflecting additive, an impact modifier, a blowing agent, a reinforcing agent, or a combination thereof.

Aspect 14. The article according to any of Aspects 1 to 13, wherein the article has improved plating performance as compared to a comparative LAP plated article comprising a thermoplastic composition that does not comprise the siloxane component.

Aspect 15. The article according to any of Aspects 1 to 14, wherein the article has improved notched Izod impact strength ("NII") at 23 °C as compared to a comparative LAP plated article comprising a thermoplastic composition that does not comprise the siloxane component, wherein NII is determined according to ASTM D256 using a 3.2 millimeter (mm) specimen bar.

Aspect 16. The article according to any of Aspects 1 to 15, wherein the article has a notched Izod impact strength ("NII") at 23 °C of at least 150 Joules per meter (J/m), wherein NII is determined according to ASTM D256 using a 3.2 millimeter (mm) specimen bar.

Aspect 17. The article according to any of Aspects 1 to 16, wherein the LAP process comprises:

etching a surface of the substrate component with a laser to form an etched surface;
applying a colloidal metallic treatment to the etched surface to form a grafted metallic surface; and
applying a plurality of metal layers to the grafted metallic surface to form the metal film.

Aspect 18. The article according to any of Aspects 1 to 17, wherein the article is an antenna for a mobile device.

Aspect 19. The article according to Aspect 18, wherein the mobile device is a laptop, a tablet, a mobile phone, or a smart device.

Aspect 20. A method for forming a laser activated plating (LAP) article, the method comprising:

(a) forming a substrate component comprising a thermoplastic composition;
(b) etching a surface of the substrate component with a laser to form an etched surface;
(c) applying a colloidal metallic treatment to the etched surface to form a grafted metallic surface; and
(d) applying a plurality of metal layers to the grafted metallic surface to form the LAP article,

wherein the thermoplastic composition comprises:

(1) from about 10 wt% to about 80 wt% of a polycarbonate component;
(2) from about 5 wt% to about 80 wt% of a siloxane component comprising a poly(carbonate-siloxane) copolymer or silicon oil, wherein the poly(carbonate-siloxane) copolymer, if present, is different from the polycarbonate component in element (1);
(3) from about 10 wt% to about 60 wt% of a glass fiber component; and
(4) from about 1 wt% to about 15 wt% of a flame retardant component comprising a phosphorous compound, and

wherein the combined weight percent value of all components does not exceed 100 wt%, and all weight percent values are based on the total weight of the composition.

Aspect 21. The method according to Aspect 20, wherein the thermoplastic composition comprises:

(1) from about 20 wt% to about 40 wt% of the polycarbonate component;
(2) from about 5 wt% to about 10 wt% of the siloxane component;
(3) from about 40 wt% to about 60 wt% of the glass fiber component; and
(4) from about 5 wt% to about 10 wt% of the flame retardant component.

Aspect 22. The method according to Aspect 20 or 21, wherein the thermoplastic composition does not include a laser direct structuring additive.

Aspect 23. The method according to any of Aspects 20 to 22, wherein the composition does not comprise copper or tin.

## EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation

will be required to optimize such process conditions.

Components used in the comparative and example compositions described herein are listed in Table 1:

**Table 1 - Components**

| Component | Supplier |
|---|---|
| Polycarbonate homopolymer (PCP1300) | SABIC |
| Polycarbonate homopolymer, 100 Grade PCP (100 Grade PCP) | SABIC |
| High flow ductile polyester-PC copolymer (low Mw) (HFD low Mw) | SABIC |
| High flow ductile polyester-PC copolymer (high Mw) (HFD high Mw) | SABIC |
| PC-Si copolymer (20% siloxane content) (EXL) | SABIC |
| Branched THPE, HBN Endcapped PC (CFR) | SABIC |
| SAN encapsulated PTFE (SAN-PTFE) | SABIC |
| Pentaerythritol tetrastearate (PETS) | Longshan |
| Octadecyl 3 -(3,5 -di-tert-butyl-4-hydroxyphenyl) propionate (AO1076) | Ciba |
| Tris(2,4-di-t-butylphenyl)phosphite, antioxidant (AO168) | BASF |
| E-glass fiber, 'flat' cross section, 307AT (GF) | CPIC |
| Phenoxyphosphazene HPCTP, FR additive (PPZ) | Weihai Jinwei |
| Dimethylpolysiloxane and MQ resin (SFR100) | Momentive |
| Carbon black | Cabot |

The pellet compounding process was implemented on a lab extruder. Glass fiber (GF) was fed through a side feeder; the other resins and additives were pre-blended and fed through a throat feeder. Compounding conditions for the compositions are shown in Table 2:

**Table 2 - Compounding Conditions**

| | | PC + GF | HFD PC + GF |
|---|---|---|---|
| Compounder Type | / | TEM-37BS | TEM-37BS |
| Barrel Size | mm | 1500 | 1500 |
| Die | mm | 4 | 4 |
| Zone 1 Temp | °C | 50 | 50 |
| Zone 2 Temp | °C | 100 | 100 |
| Zone 3 Temp | °C | 200 | 240 |
| Zone 4-8 Temp | °C | 255 | 240 |
| Zone 9 Temp | °C | 260 | 240 |
| Zone 10-11 Temp | °C | 265 | 240 |
| Die Temp | °C | 265 | 245 |
| Screw speed | rpm | 300 | 300 |
| Throughput | kg/hr | 40 | 40 |
| Torque | % | 60-65 | 60-65 |
| Vacuum 1 | MPa | -0.08 | -0.08 |
| Side Feeder 1 speed | rpm | 250 | 250 |

The compositions were then injection molded into samples according to the conditions in Table 3:

**Table 3 - Injection Molding Conditions**

| Condition | | PC+GF and HFD PC+GF | | |
|---|---|---|---|---|
| | | Mechanical | Plaque 1mm for LAP | FR bar 1mm |
| Pre-drying time | Hour | 4 | 4 | 4 |
| Pre-drying Temp | °C | 100 | 100 | 100 |
| Hopper Temp | °C | 50 | 50 | 50 |
| Zone 1 Temp | °C | 260 | 270 | 260 |
| Zone 2 Temp | °C | 275 | 285 | 275 |
| Zone 3 Temp | °C | 275 | 285 | 275 |
| Nozzle Temp | °C | 275 | 285 | 275 |
| Mold Temp | °C | 80 | 90 | 70 |
| Holding pressure | bar | 800 | 300 | 1500 |

The compositions were tested for various mechanical, thermal and flame retardant (FR) properties as shown in Table 4:

**Table 4 - Properties and Standards**

| Test/Condition | Unit | Specimen | Standard |
|---|---|---|---|
| Melt Flow Rate (MFR), 300 °C, 2.16 kg, 360s | g/10min | Pellet, pre-dried | ASTM D1238 |
| Notched Izod Impact Strength (NII), 23 °C | J/m | 3.2 mm bar | ASTM D256 |
| Tensile Modulus (TM), 5 mm/min | MPa | Type I bar | ASTM D638 |
| Tensile Stress at Break (TS), Type I, 5 mm/min | MPa | Type I bar | ASTM D638 |
| Tensile Elongation at Break (TE), Type I, 5 mm/min | % | Type I bar | ASTM D638 |
| Heat Deflection Temperature (HDT), 1.82 MPa | °C | 3.2 mm flexural bar | ASTM D648 |
| Flame rating (FR), normal at 23 °C at 50% RH for 48 hrs | / | 127 x 12.7 x 1mm | UL94 V test |
| FR, aging condition at 70 °C for 168 hrs | / | 127 x 12.7 x 1mm | UL94 V test |

The comparative and example compositions formed as set forth above are shown in Table 5A. Selected mechanical, thermal and FR properties of the compositions are shown in Table 5B:

**Table 5A - Comparative and Example Compositions**

| Component (wt%) | | C1 | C2 | E3 | E4 | C5 | E6 | E7 |
|---|---|---|---|---|---|---|---|---|
| PCP1300 | | 37.3 | 30.3 | 22.3 | 24.3 | | | |
| 100 Grade PCP | | 3 | | | | | | |
| HFD low Mw | | | | | | 22.85 | 17.3 | 18.3 |
| HDF high Mw | | | | | | 7.45 | 5 | 6 |
| PC-Si Copolymer (20% siloxane content) | | | | 8 | 5.5 | | 8 | 5.5 |
| CFR | | | 10 | 10 | 10 | 10 | 10 | 10 |
| SAN-PTFE | | 0.5 | 0.5 | 0.5 | 0.5 | 0.5 | 0.5 | 0.5 |
| PETS | | 0.5 | 0.5 | 0.5 | 0.5 | 0.5 | 0.5 | 0.5 |
| AO1076 | | 0.1 | 0.1 | 0.1 | 0.1 | 0.1 | 0.1 | 0.1 |
| A0168 | | 0.1 | 0.1 | 0.1 | 0.1 | 0.1 | 0.1 | 0.1 |

(continued)

| Component (wt%) | | C1 | C2 | E3 | E4 | C5 | E6 | E7 |
|---|---|---|---|---|---|---|---|---|
| GF | | 50 | 50 | 50 | 50 | 50 | 50 | 50 |
| PPZ | | 8 | 8 | 8 | 8 | 8 | 8 | 8 |
| SFR100 | | | | | 0.5 | | | 0.5 |
| Carbon black | | 0.5 | 0.5 | 0.5 | 0.5 | 0.5 | 0.5 | 0.5 |
| **Total (wt%)** | | 100 | 100 | 100 | 100 | 100 | 100 | 100 |

**Table 5B - Properties of Table 5A Compositions**

| Property | Unit | C1 | C2 | E3 | E4 | C5 | E6 | E7 |
|---|---|---|---|---|---|---|---|---|
| MFR | g/10 min | 15.4 | 22.6 | 10.1 | 15.8 | 22.2 | 21.3 | 23.6 |
| Ash (800 °C) | % | 51.2 | 51.4 | 51.8 | 51.6 | 51.3 | 51.6 | 51.4 |
| TM | MPa | 16138 | 16451 | 15875 | 15710 | 15968 | 15538 | 15687 |
| TS | MPa | 150 | 153 | 158 | 155 | 159 | 149 | 154 |
| TE | % | 2.0 | 2.0 | 2.3 | 2.3 | 2.2 | 2.0 | 2.3 |
| NII | J/m | 151 | 150 | 180 | 178 | 158 | 191 | 191 |
| HDT | °C | 104 | 103 | 104 | 103 | 96 | 98 | 96 |
| Flame Rating (1.0 mm) | | V0 | V0 | V0 | V0 | V0 | V0 | V0 |
| FTP V0, normal | | 1.00 | 0.99 | 1.00 | 1.00 | 0.98 | 0.51 | 0.87 |
| FTP V0, aging | | 1.00 | 0.98 | 0.99 | 1.00 | 0.94 | 0.98 | 0.94 |
| FOT, 5 bars, normal | | 23.7 | 22.5 | 23.2 | 22.6 | 26.2 | 38.7 | 32.7 |
| FOT, 5 bars, aging | | 24.0 | 31.8 | 34.5 | 26.2 | 25.6 | 32.2 | 29.0 |

Samples of the compositions of Table 5A were subjected to a LAP process; the samples were first subjected to a laser etching process followed by a colloidal metal (palladium) treatment and finally a nickel (Ni) metal plating process. Photographs of plated samples of the example and comparative compositions are shown in FIGS. 1A and 1B. Example compositions E3 and E4 include PC-Si copolymer while comparative compositions C1 and C2 do not. Similarly, example compositions E6 and E7 include PC-Si copolymer while comparative composition C5 does not. Comparing E3/E4 to C1/C2 and E6/E7 to C5, there is a clear difference in chemical plating property. Regardless of the type of base polycarbonate resin used (PC homopolymer or PC copolymer (HFD)), when no siloxane (in PC-Si copolymer or silicone oil) is present the Ni plating layer is not uniformly plated on the substrate (see C1, C2 and C5). This effect is observable visually with the naked eye. In contrast, when siloxane (in PC-Si copolymer or siloxane oil) is included in the composition (E3, E4, E6, E7), the Ni plating layer quality is significantly improved. Further, as observed in Table 5A the notched Izod impact strength is also improved in the example compositions without substantially affecting other mechanical, thermal and flame retardant properties.

To further evaluate the effect of siloxane on the LAP-plated samples, additional analyses were performed on the comparative and example compositions to evaluate morphology differences between the samples.

With reference to FIGS. 2A-2D, optical microscope (OM) images of the LAP plated samples were prepared. Consistent with the images in FIGS. 1A and 1B, the chemical plating of comparative compositions C2 and C5 is unsatisfactory. The Ni particles, represented by small white dots, are mainly distributed along the sides of the glass fiber and are not well distributed throughout the resin. The Ni particles formed along the edges of the glass fiber outline the glass fibers and show the glossiness of the glass fibers. Comparatively, in the OM images for example compositions E3 and E6 the Ni particles are distributed throughout the resin and glass fiber. The particles form a film layer on the resin/GF composition, and subsequent layers of metal can be plated on layer after layer until the full metal film is formed. This is not possible with the comparative samples C2 and C5. In addition, the glossiness in the E3 and E6 is attributable to the Ni film only rather than the glass fiber, resin and Ni particles of the C2 and C5 samples.

To provide further details about the Ni plating effectiveness, surface characterization of the samples was performed by scanning electron microscopy (SEM). As illustrated in FIGS. 3A-3D, the surface of the E3 and E6 samples is fully covered by the Ni film with very little defects detected. Ni particles having a size of 20 to 30 micron (μm) are aggregated by multi nano-sized particles, with the particles evenly distributed through the resin and glass fibers. From the C2 and C5 images it is apparent that the uncovered surface of resin in the comparative compositions is relatively smooth, and only a small number of nano-sized Ni particles are spread over the edge of this smooth resin surface.

To further consider this effect, the morphology of the resin in the samples after laser etching was evaluated. FIGS. 4A-4D show SEM images of the laser etched surface (i.e., before the plating process). From these images a significant difference of resin morphology between two types of samples was observed. In C2 and C5, although a porous structure was formed, most of the pores on the surface were closed, resulting in a smooth surface. In contrast, the pores on the surface of the resin of example compositions E3 and E6 are open. In addition, compared to C2 and C5, there are more nano and micron resin particles on the surface in example compositions E3 and E6. The combined effect of the open pores and nano/micro resin particles is a relatively rough surface on the E3 and E6 samples. This is consistent with the chemically plated images in FIGS. 3A-3D, which demonstrate that the smooth surface of the resin in the C2 and C5 samples results in concentration of metal particles on the glass fibers rather than distributed throughout the resin. Moreover, nano-sized Ni particles selectively deposit on the rough surface, and then tend to aggregate into micro-sized particles. Thus, since there were more rough surfaces in the E3 and E6 samples, nano-sized Ni particles were first deposited and then aggregated into micro-sized particles, and finally the Ni film was formed. In contrast, in the comparative C2 and C5 samples, the chemical plating process was interrupted in the second stage (nano to micro particle formation), leading to the incomplete chemical plating.

From the data presented herein the effect of siloxane on improved LAP plating performance of the compositions described herein is conclusively demonstrated.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or non-volatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

**1.** An article formed according to a process comprising:

(a) forming a substrate component comprising a thermoplastic composition; and
(b) applying a laser activated plating (LAP) process to the substrate component to apply a metal film on the substrate component and form the article,

wherein the thermoplastic composition comprises:

(1) from about 10 wt% to about 80 wt% of a polycarbonate component;
(2) from about 5 wt% to about 80 wt% of a siloxane component comprising a poly(carbonate-siloxane) copolymer or silicon oil, wherein the poly(carbonate-siloxane) copolymer, if present, is different from the polycarbonate

component in element (1);
(3) from about 10 wt% to about 60 wt% of a glass fiber component; and
(4) from about 1 wt% to about 15 wt% of a flame retardant component comprising a phosphorous compound, and

wherein the combined weight percent value of all components does not exceed 100 wt%, and all weight percent values are based on the total weight of the composition.

2. The article according to claim 1, wherein the thermoplastic composition comprises:

(1) from about 20 wt% to about 40 wt% of the polycarbonate component;
(2) from about 5 wt% to about 10 wt% of the siloxane component;
(3) from about 40 wt% to about 60 wt% of the glass fiber component; and
(4) from about 5 wt% to about 10 wt% of the flame retardant component.

3. The article according to claim 1 or 2, wherein the thermoplastic composition does not include a laser direct structuring additive.

4. The article according to any of claims 1 to 3, wherein the composition does not comprise copper or tin.

5. The article according to any of claims 1 to 4, wherein the polycarbonate component comprises a polycarbonate homopolymer, a polycarbonate copolymer, or a combination thereof

6. The article according to claim 5, wherein the polycarbonate component comprises a polycarbonate copolymer comprising sebacic acid monomer units and bisphenol-A monomer units.

7. The article according to any of claims 1 to 6, wherein the siloxane component comprises a poly(carbonate-siloxane) copolymer, wherein the poly(carbonate-siloxane) copolymer has a siloxane content of from about 5 wt% to about 45 wt%.

8. The article according to claim 7, wherein the thermoplastic composition comprises from about 5 wt% to about 20 wt% of a poly(carbonate-siloxane) copolymer having a siloxane content of from about 15 wt% to about 25 wt%.

9. The article according to any of claims 1 to 8, wherein the glass fiber component comprises flat glass fibers.

10. The article according to any of claims 1 to 9, wherein the flame retardant compound comprising a phosphorous compound comprises phenoxyphosphazene (PPZ), bisphenol-A diphenyl phosphate (BPADP), resorcinol diphosphate (RDP), phosphorous acid, borate acid, a phosphate ester, bisphenol-A bis(diphenyl phosphate) (BDP), or a combination thereof.

11. The article according to any of claims 1 to 10, wherein the thermoplastic composition further comprises from greater than 0 wt% to about 15 wt% of an additional polycarbonate copolymer comprising 1,1,1-tris-(p-hydroxyphenyl)ethane (THPE) branched 4-hydroxybenzonitrile (HBN) endcapped polycarbonate.

12. The article according to any of claims 1 to 11, wherein the article has improved plating performance as compared to a comparative LAP plated article comprising a thermoplastic composition that does not comprise the siloxane component.

13. The article according to any of claims 1 to 12, wherein the article has improved notched Izod impact strength ("NII") at 23 °C as compared to a comparative LAP plated article comprising a thermoplastic composition that does not comprise the siloxane component, wherein NII is determined according to ASTM D256 using a 3.2 millimeter (mm) specimen bar.

14. The article according to any of claims 1 to 13, wherein the article has a notched Izod impact strength ("NII") at 23 °C of at least 150 Joules per meter (J/m), wherein NII is determined according to ASTM D256 using a 3.2 millimeter (mm) specimen bar.

15. The article according to any of claims 1 to 14, wherein the LAP process comprises:

etching a surface of the substrate component with a laser to form an etched surface;
applying a colloidal metallic treatment to the etched surface to form a grafted metallic surface; and
applying a plurality of metal layers to the grafted metallic surface to form the metal film.

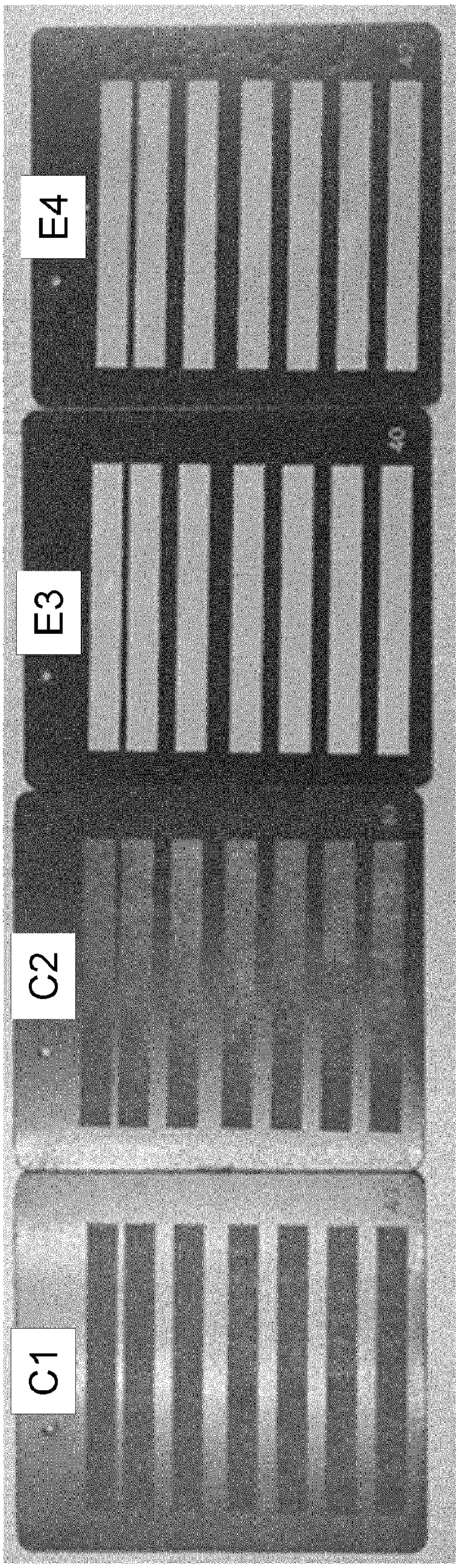


FIG. 1A

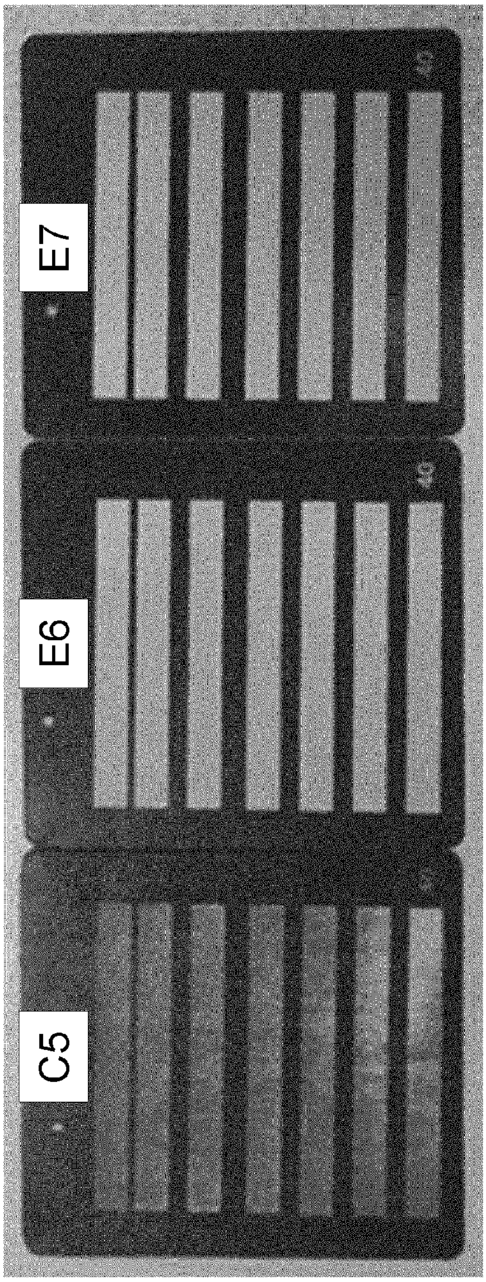


FIG. 1B

Composition C2 - After Plating (OM)

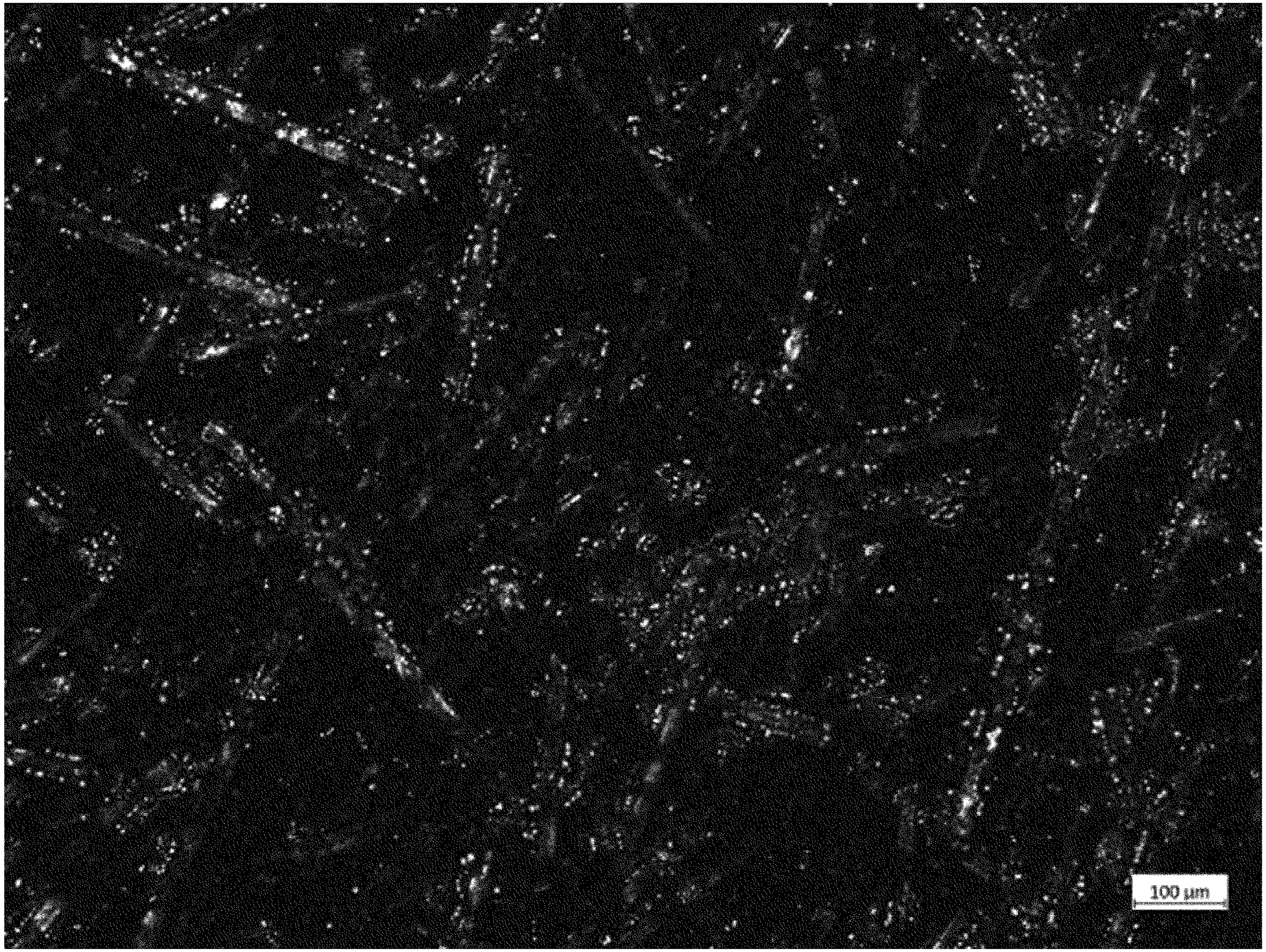


FIG. 2A

Composition E3 - After Plating (OM)

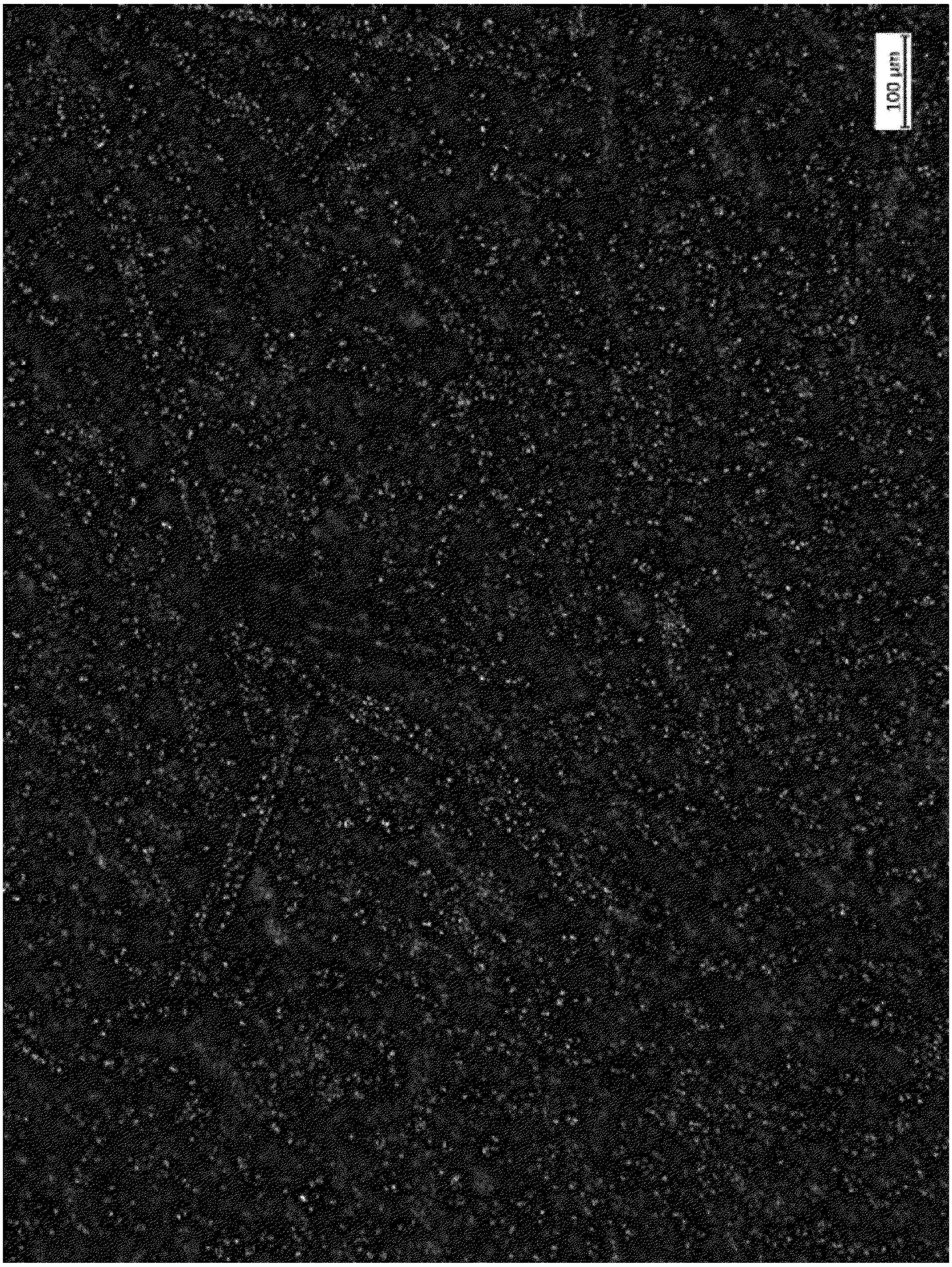


FIG. 2B

Composition C5 - After Plating (OM)

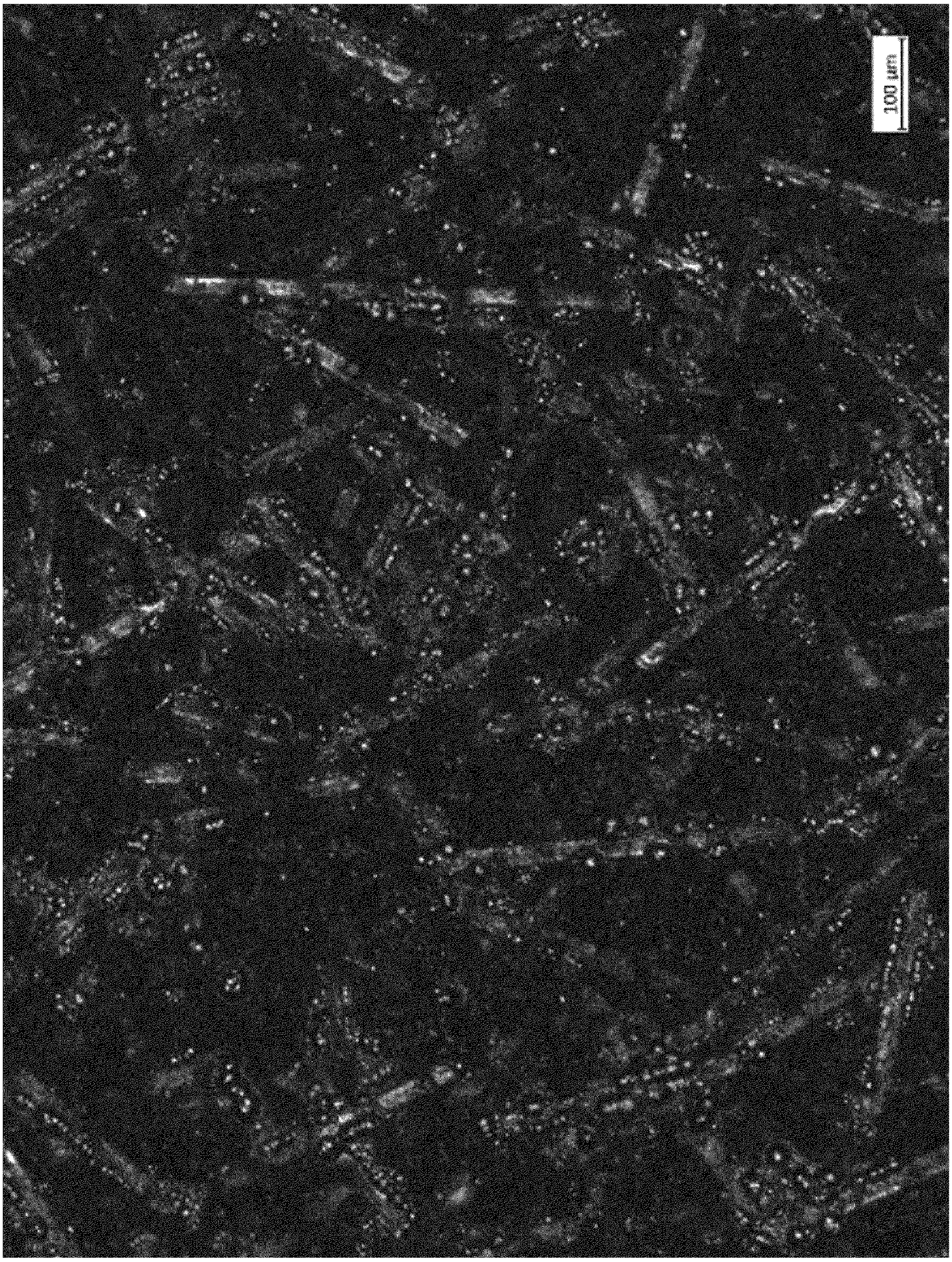


FIG. 2C

Composition E6 - After Plating (OM)

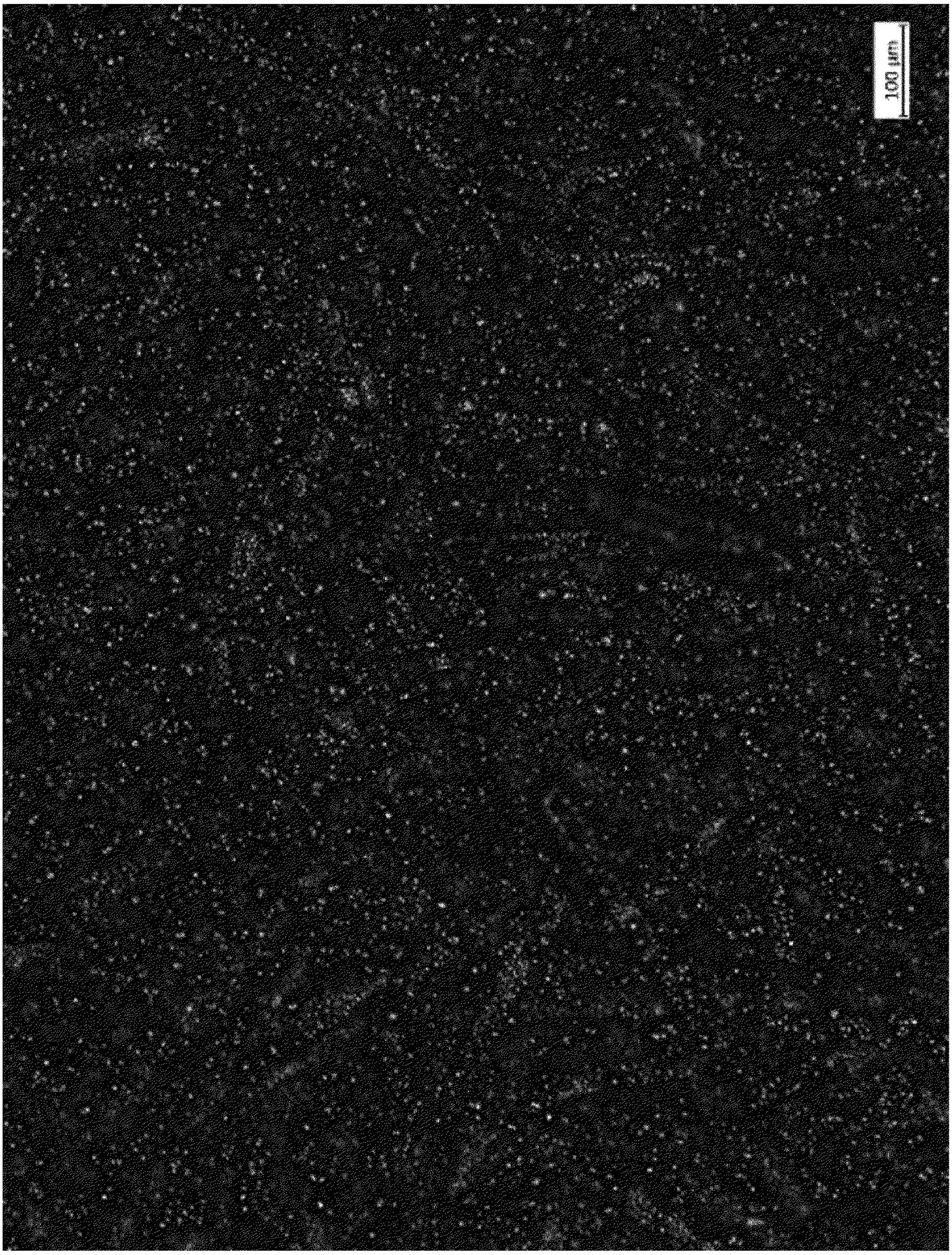


FIG. 2D

Composition C2 - After Plating (SEM, 500x)

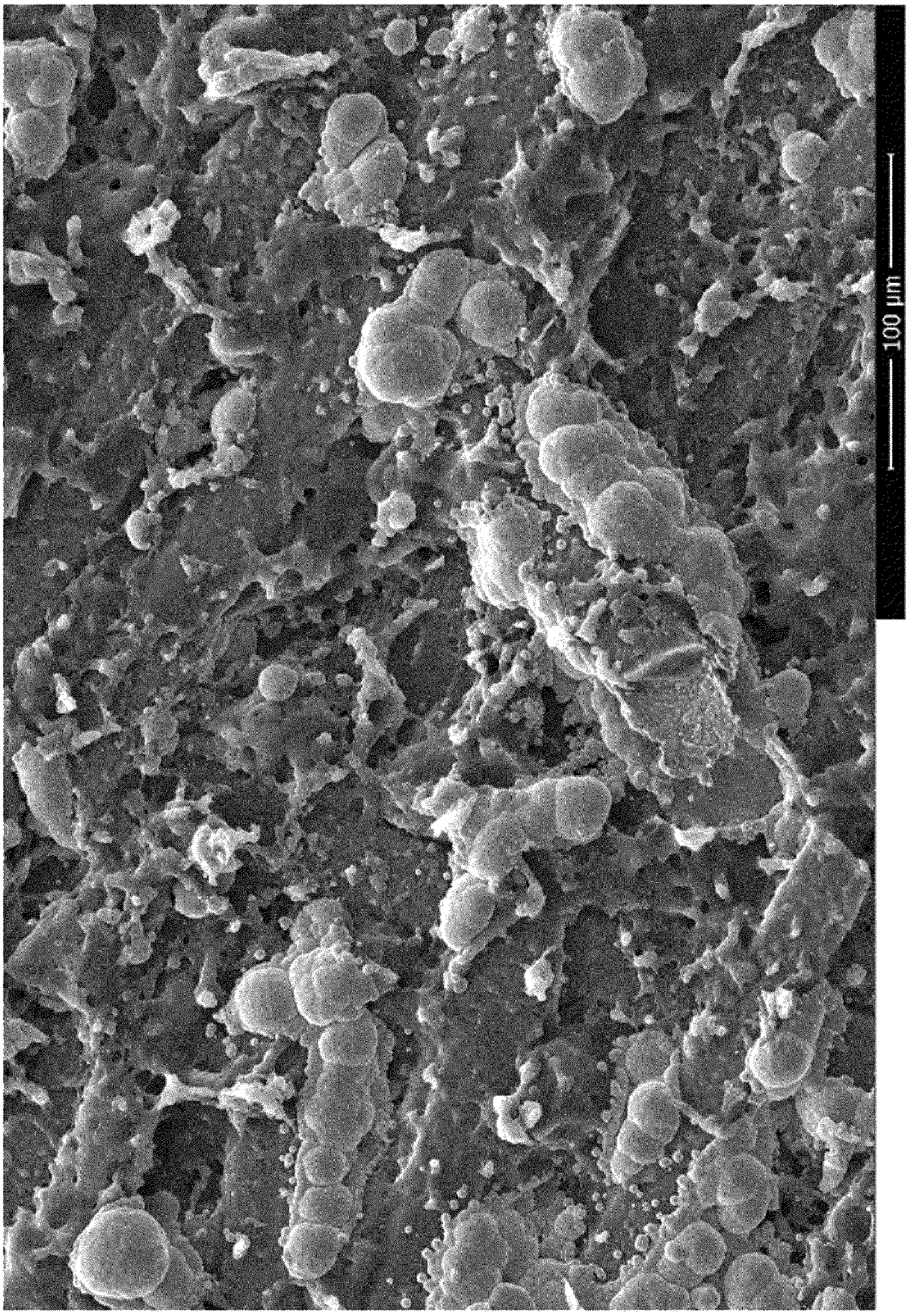


FIG. 3A

Composition E3 - After Plating (SEM, 500x)

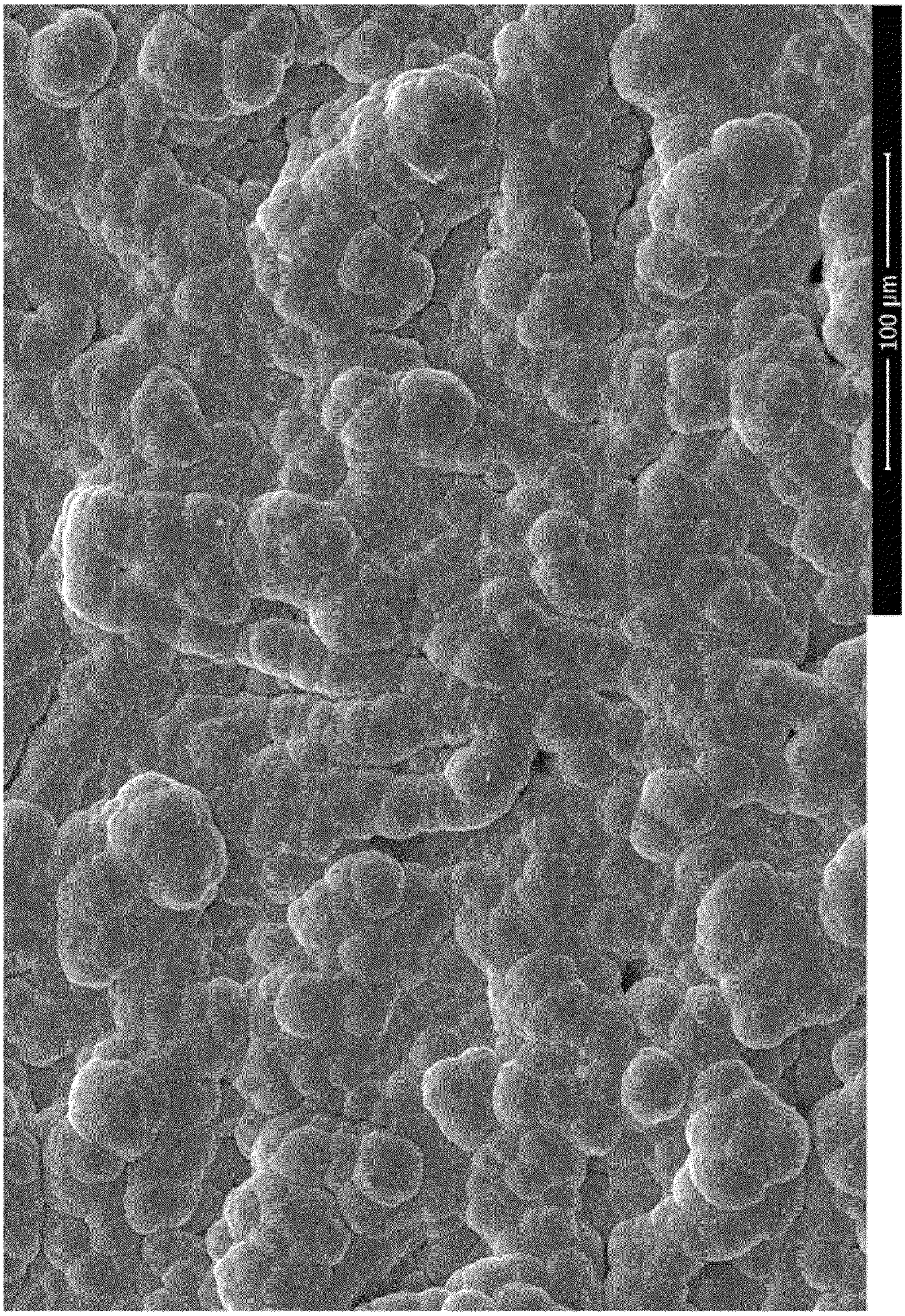


FIG. 3B

Composition C5 - After Plating (SEM, 500x)

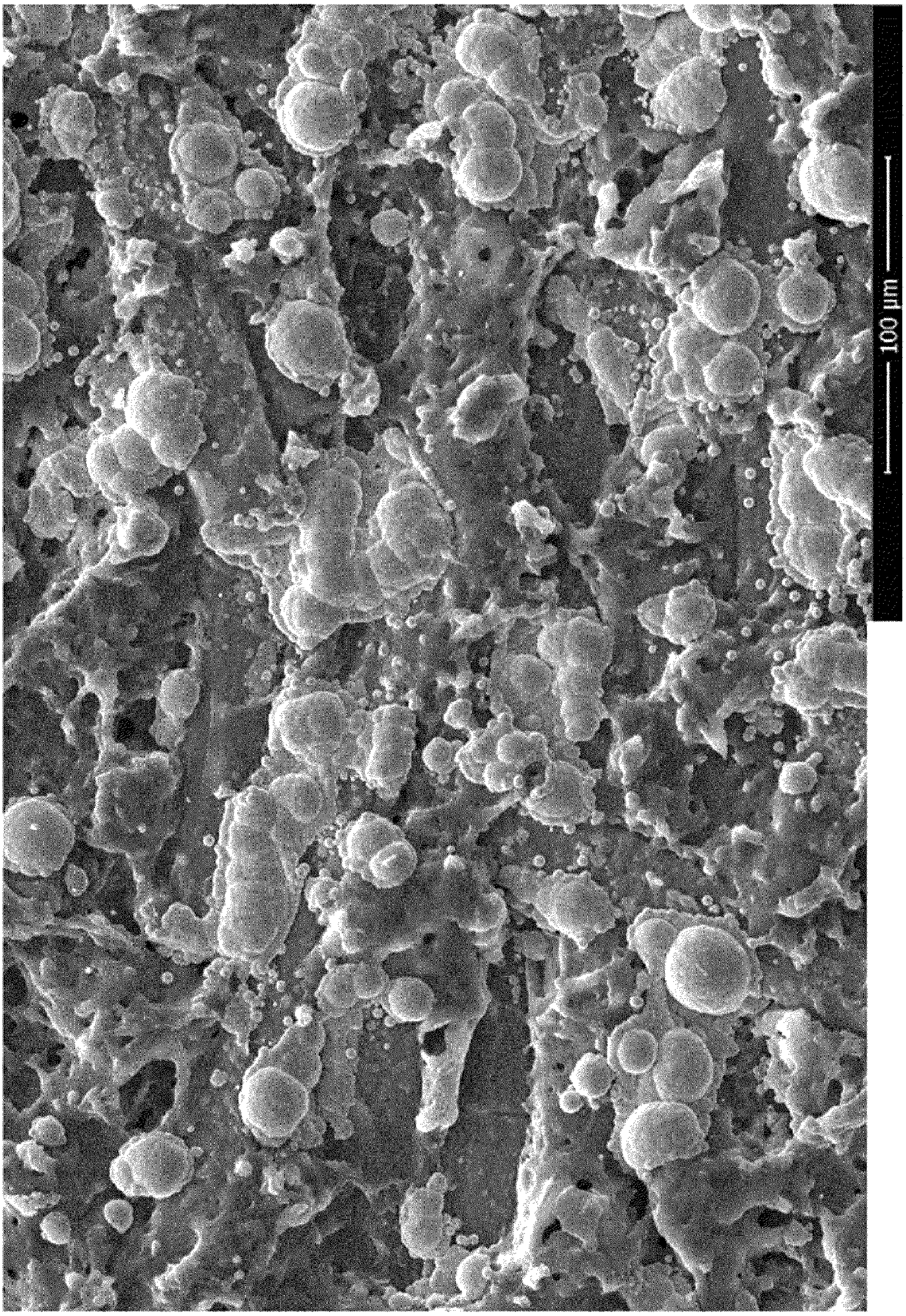


FIG. 3C

Composition E6 - After Plating (SEM, 500x)

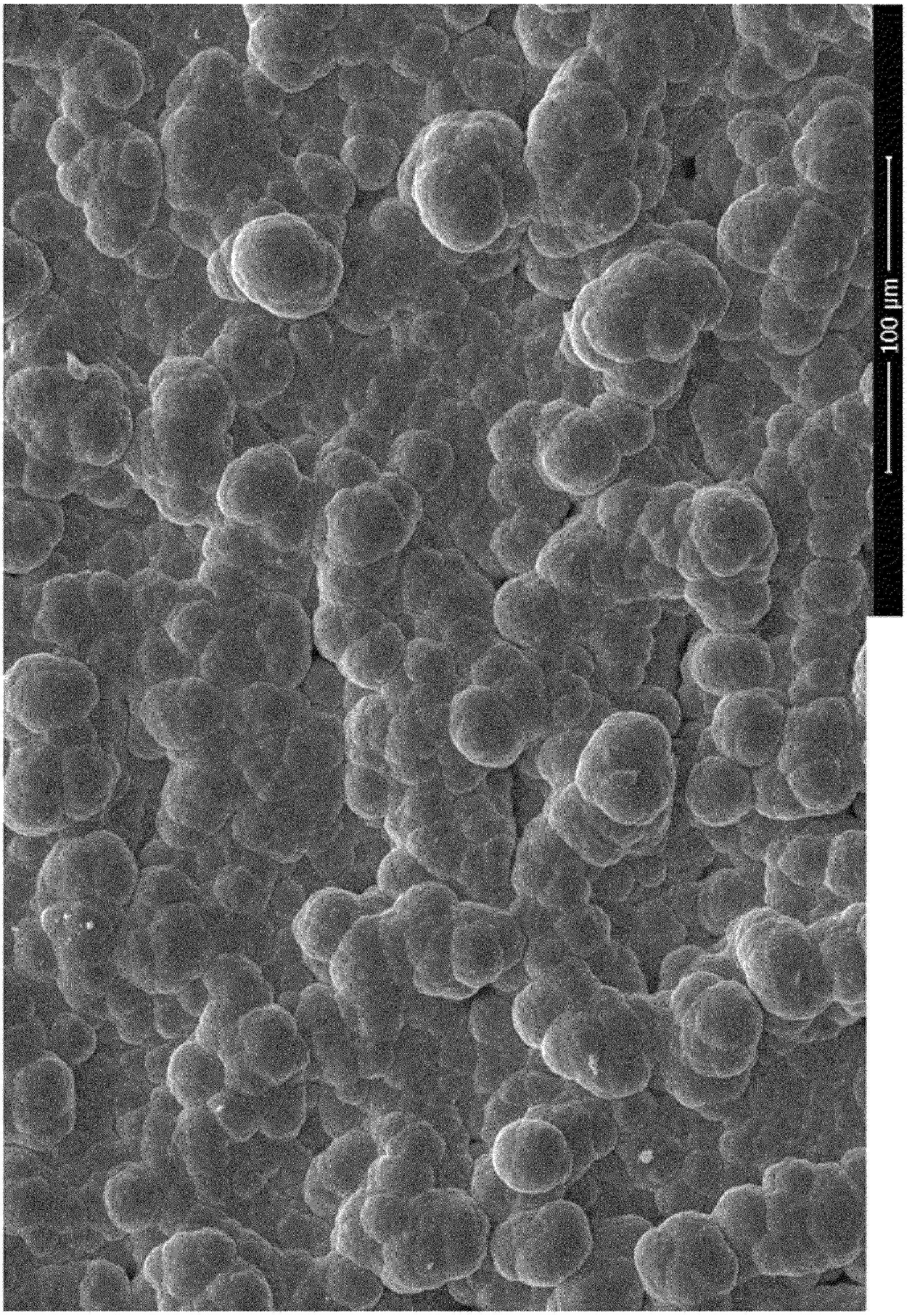


FIG. 3D

Composition C2 - After Laser Etching (SEM, 1000x)

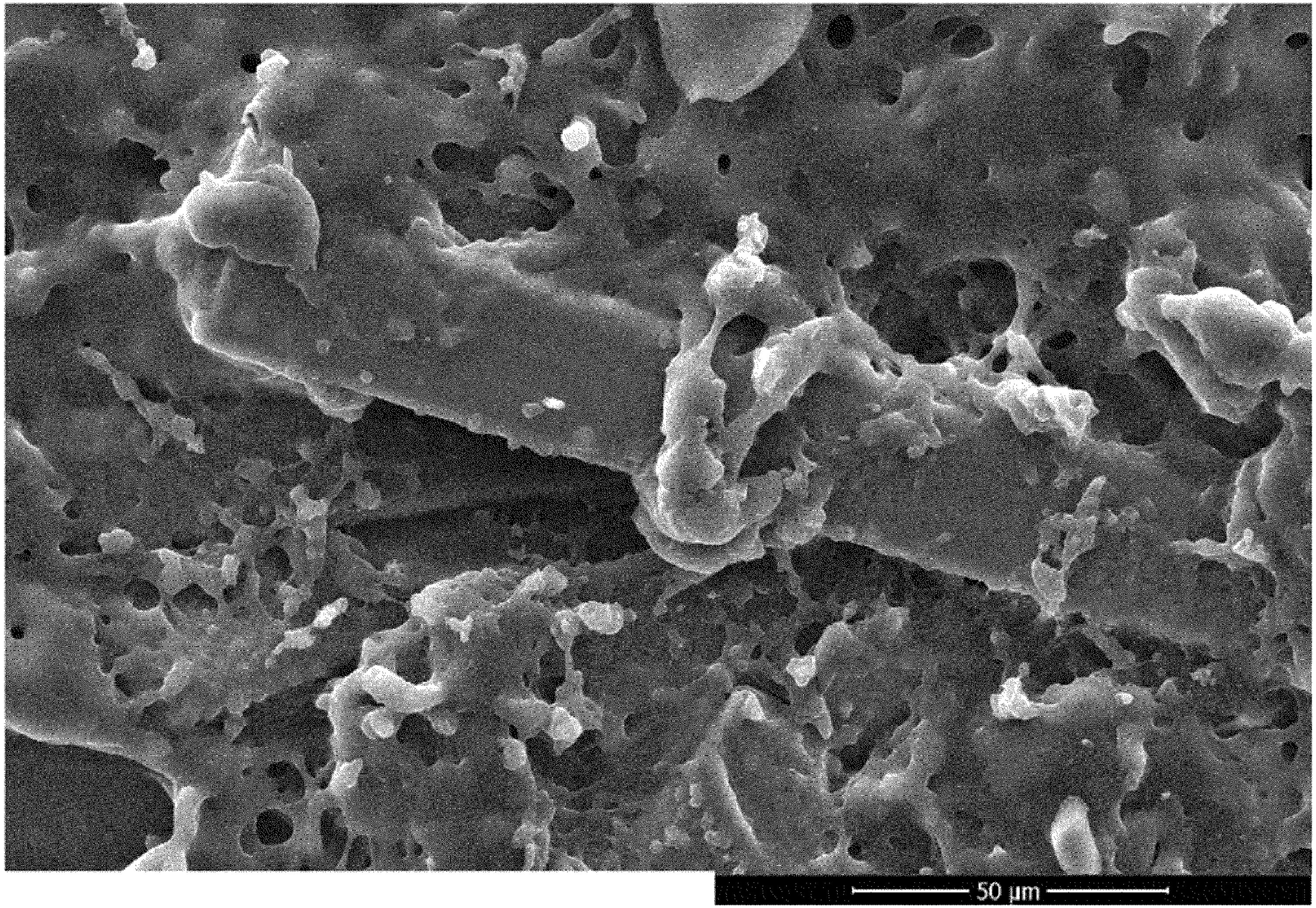


FIG. 4A

Composition E3 - After Laser Etching (SEM, 1000x)

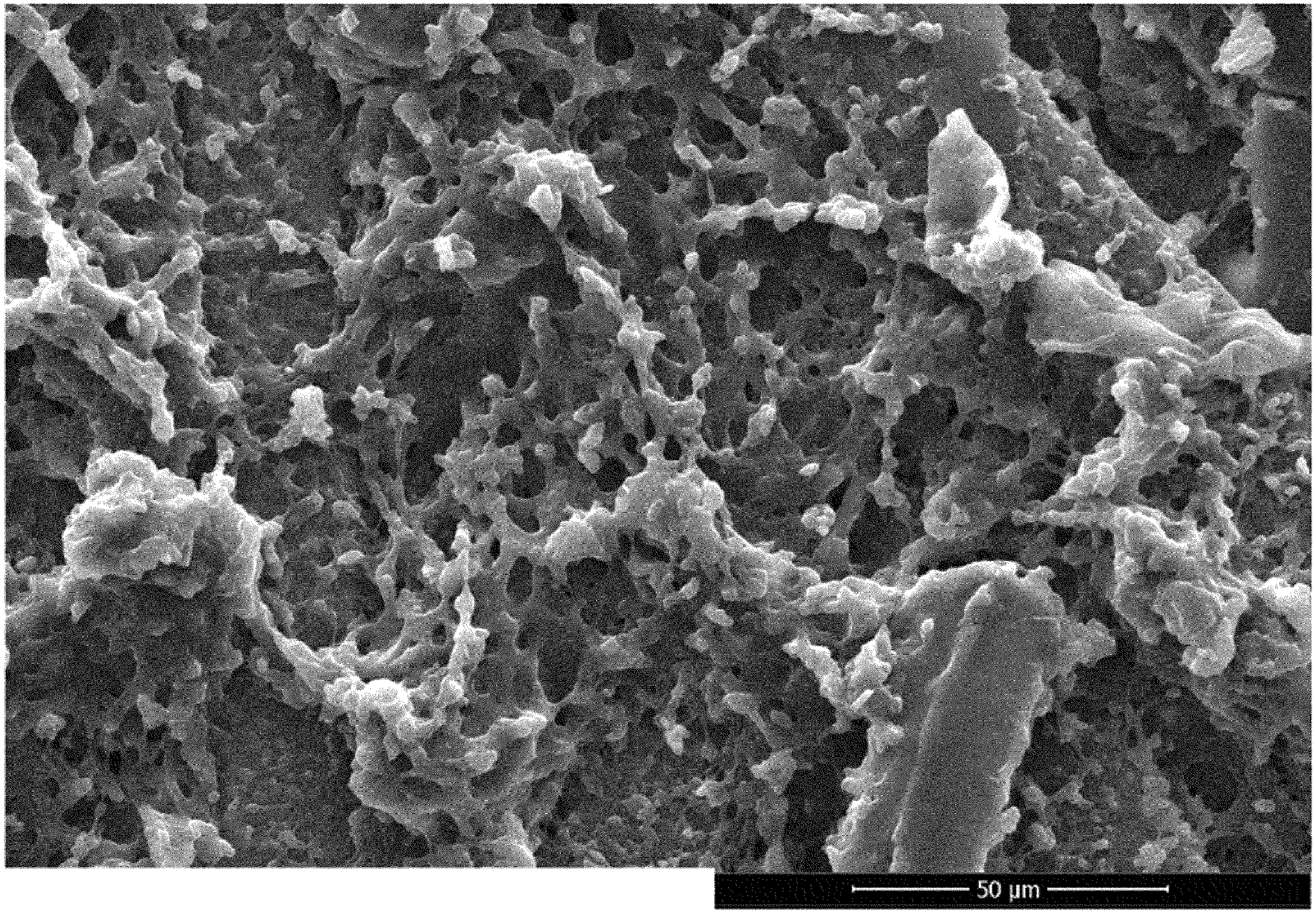


FIG. 4B

Composition C5 - After Laser Etching (SEM, 1000x)

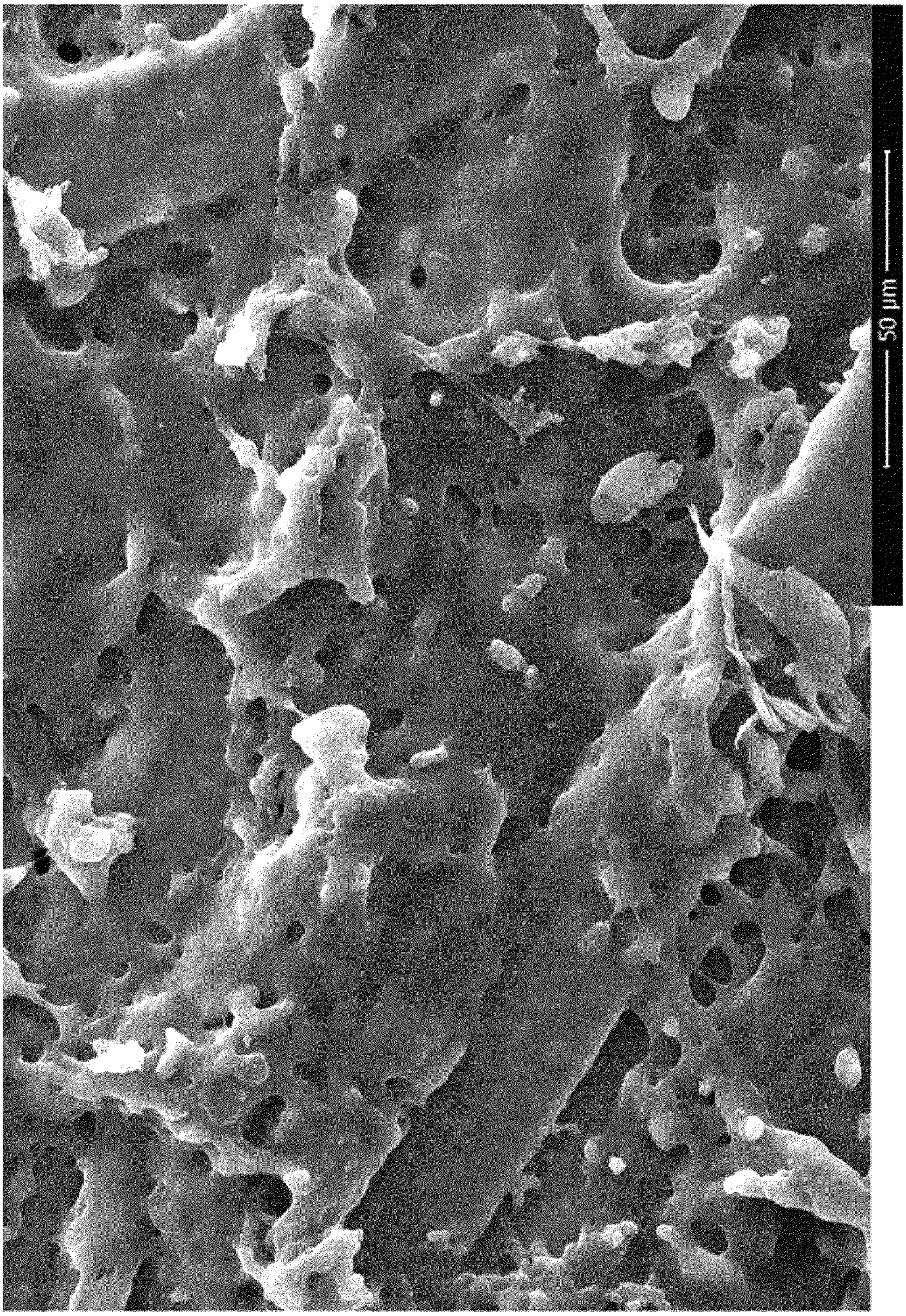


FIG. 4C

Composition E6 - After Laser Etching (SEM, 1000x)

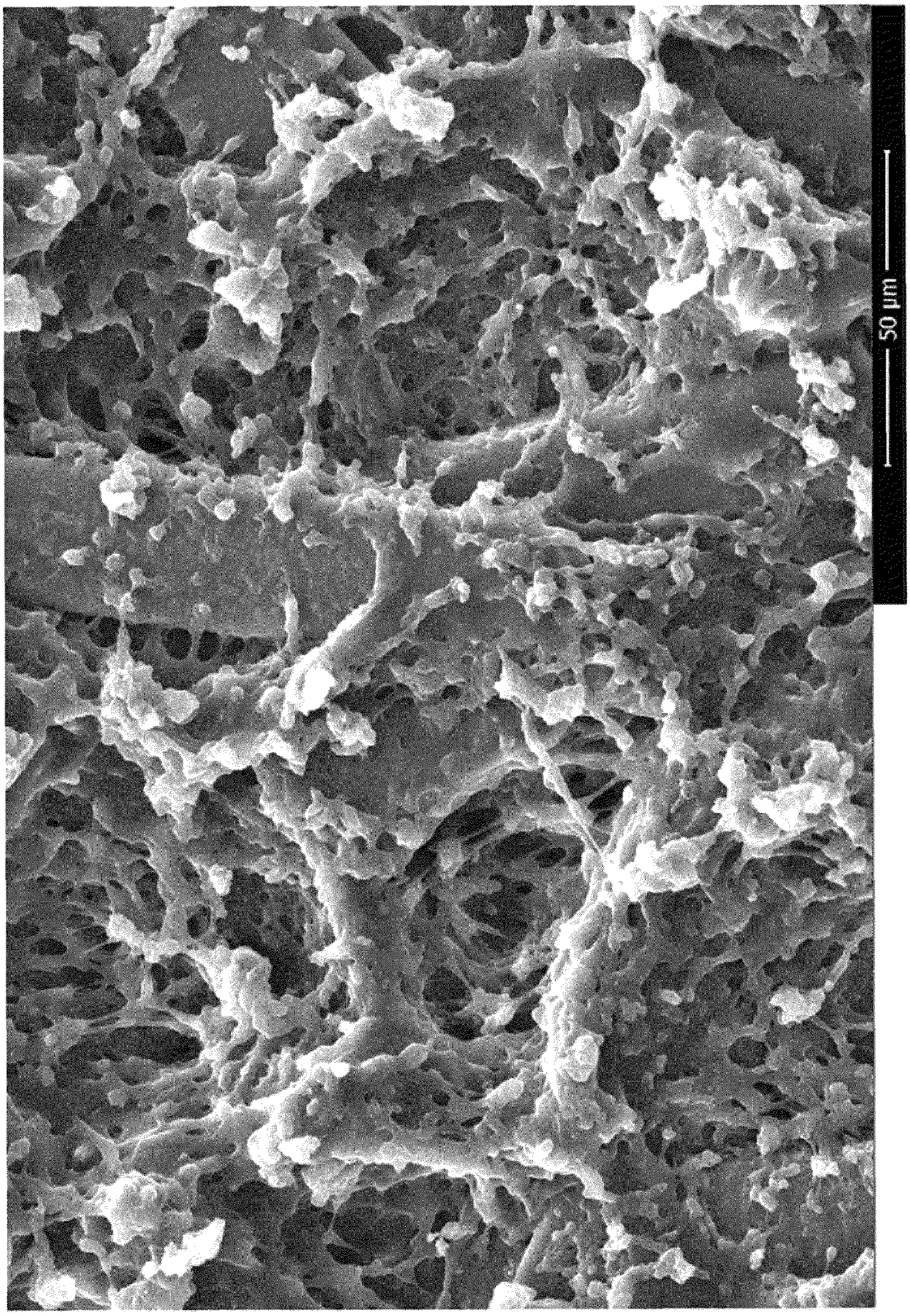


FIG. 4D

Europäisches Patentamt
European Patent Office
Office européen des brevets

# EUROPEAN SEARCH REPORT

Application Number
EP 22 15 0716

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2019/322861 A1 (WEI ZHENKE [CN] ET AL) 24 October 2019 (2019-10-24)<br>* claims 1-20 *<br>* table 5 *<br>----- | 1-15 | INV.<br>C08L69/00<br>C23C18/20 |
| Y | US 9 394 483 B2 (SABIC INNOVATIVE PLASTICS IP [NL]; SABIC GLOBAL TECHNOLOGIES BV [NL]) 19 July 2016 (2016-07-19)<br>* claims 1-20 *<br>* Examples *<br>----- | 1-15 | |
| Y | US 10 196 515 B2 (TEIJIN LTD [JP]) 5 February 2019 (2019-02-05)<br>* claims 1-13 *<br>* Examples *<br>----- | 1-15 | |

TECHNICAL FIELDS SEARCHED (IPC)

C23C
C08L
C08K

The present search report has been drawn up for all claims

1

| Place of search | Date of completion of the search | Examiner |
|---|---|---|
| The Hague | 30 May 2022 | Pouilley, Delphine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 22 15 0716

This annex lists the patent family members relating to the patent documents cited in the above-mentioned European search report. The members are as contained in the European Patent Office EDP file on
The European Patent Office is in no way liable for these particulars which are merely given for the purpose of information.

30-05-2022

| Patent document cited in search report | Publication date | Patent family member(s) | Publication date |
|---|---|---|---|
| US 2019322861 A1 | 24-10-2019 | CN 109196036 A | 11-01-2019 |
| | | EP 3448927 A1 | 06-03-2019 |
| | | KR 20180136989 A | 26-12-2018 |
| | | US 2019322861 A1 | 24-10-2019 |
| | | WO 2017187384 A1 | 02-11-2017 |
| US 9394483 B2 | 19-07-2016 | CN 104334638 A | 04-02-2015 |
| | | CN 104350098 A | 11-02-2015 |
| | | CN 104364313 A | 18-02-2015 |
| | | CN 104395402 A | 04-03-2015 |
| | | CN 104395403 A | 04-03-2015 |
| | | CN 104428354 A | 18-03-2015 |
| | | CN 104583316 A | 29-04-2015 |
| | | CN 104704059 A | 10-06-2015 |
| | | CN 107434907 A | 05-12-2017 |
| | | EP 2855570 A1 | 08-04-2015 |
| | | EP 2855575 A2 | 08-04-2015 |
| | | EP 2855581 A1 | 08-04-2015 |
| | | EP 2855585 A1 | 08-04-2015 |
| | | EP 2855586 A1 | 08-04-2015 |
| | | EP 2855587 A1 | 08-04-2015 |
| | | EP 2855588 A1 | 08-04-2015 |
| | | EP 2855593 A2 | 08-04-2015 |
| | | EP 3202851 A1 | 09-08-2017 |
| | | KR 20150013758 A | 05-02-2015 |
| | | KR 20150013814 A | 05-02-2015 |
| | | KR 20150013897 A | 05-02-2015 |
| | | KR 20150023341 A | 05-03-2015 |
| | | KR 20150023453 A | 05-03-2015 |
| | | KR 20150023463 A | 05-03-2015 |
| | | US 2013313493 A1 | 28-11-2013 |
| | | US 2013317141 A1 | 28-11-2013 |
| | | US 2013317143 A1 | 28-11-2013 |
| | | US 2013317144 A1 | 28-11-2013 |
| | | US 2013317145 A1 | 28-11-2013 |
| | | US 2013317146 A1 | 28-11-2013 |
| | | US 2013317147 A1 | 28-11-2013 |
| | | US 2013317148 A1 | 28-11-2013 |
| | | WO 2013175445 A2 | 28-11-2013 |
| | | WO 2013175450 A2 | 28-11-2013 |
| | | WO 2013175451 A1 | 28-11-2013 |
| | | WO 2013175453 A1 | 28-11-2013 |
| | | WO 2013175455 A1 | 28-11-2013 |
| | | WO 2013175456 A1 | 28-11-2013 |
| | | WO 2013177497 A1 | 28-11-2013 |
| | | WO 2013177558 A1 | 28-11-2013 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 22 15 0716

This annex lists the patent family members relating to the patent documents cited in the above-mentioned European search report. The members are as contained in the European Patent Office EDP file on
The European Patent Office is in no way liable for these particulars which are merely given for the purpose of information.

30-05-2022

| Patent document cited in search report | Publication date | Patent family member(s) | Publication date |
|---|---|---|---|
| US 10196515 B2 | 05-02-2019 | CN 105051110 A | 11-11-2015 |
| | | EP 2977409 A1 | 27-01-2016 |
| | | JP 6195904 B2 | 13-09-2017 |
| | | JP WO2014148641 A1 | 16-02-2017 |
| | | KR 20150132087 A | 25-11-2015 |
| | | TW 201502161 A | 16-01-2015 |
| | | US 2016024301 A1 | 28-01-2016 |
| | | WO 2014148641 A1 | 25-09-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008042500 A1
- WO 2010076680 A1
- WO 2016174592 A1


### Non-patent literature cited in the description


- *CHEMICAL ABSTRACTS,* 80-05-7